# EUROPEAN PATENT APPLICATION

(11) **EP 4 790 781 A1**
(43) Date of publication of application: **12.08.2026**
(21) Application number: 26154989.3
(22) Date of filing: 29.01.2026
(51) Int. Cl.: H01M 10/0525, H01M 50/42, H01M 50/446, H01M 50/457, H01M 50/46

(54) **SEPARATOR FOR RECHARGEABLE BATTERY AND RECHARGEABLE BATTERY INCLUDING THE SAME**

(30) Priority: 31.01.2025 KR 20250012538; 31.01.2025 KR 20250012551; 31.01.2025 KR 20250012543; 31.01.2025 KR 20250012542; 31.01.2025 KR 20250012550
(71) Applicant: SAMSUNG SDI CO., LTD., Yongin-si, Gyeonggi-do 17084 (KR)
(72) Inventor: Kim, Jin Seok, 16678 Gyeonggi-do (KR); Ko, Chang Hong, 16678 Gyeonggi-do (KR); Kim, Soo Hee, 16678 Gyeonggi-do (KR); Lee, Eon Mi, 16678 Gyeonggi-do (KR); Han, Byong Joon, 16678 Gyeonggi-do (KR); Han, Yoo Bin, 16678 Gyeonggi-do (KR); Choi, Ji Eun, 16678 Gyeonggi-do (KR); Choi, In Hye, 16678 Gyeonggi-do (KR); Lee, Hak Min, 16678 Gyeonggi-do (KR); Choi, Yeon Joo, 16678 Gyeonggi-do (KR); Shin, Jae Seung, 16678 Gyeonggi-do (KR)
(74) Representative: Michalski Hüttermann & Partner mbB

(57) **Abstract**

Provided are a separator for a rechargeable battery and a rechargeable battery including the separator. The separator for a rechargeable battery includes a porous substrate and a coating layer located on at least one surface of the porous substrate, wherein the coating layer includes a crosslinked product of a mixture including a first binder and a second binder, and a crosslinking agent; and a filler. The first binder is an aqueous binder, and the second binder is a carboxyalkyl cellulose-based compound or a salt thereof The crosslinking agent includes citric acid, and the citric acid is included in a range 5 parts by weight to 50 parts by weight with respect to 100 parts by weight of the total of the first binder and the second binder.

## Description

### CROSS-REFERENCE TO RELATED APPLICATION

The present application claims priority to Korean Patent Application No.10-2025-0012538, filed on January 31, 2025 in the Korean Intellectual Property Office, Korean Patent Application No.10-2025-0012542, filed on January 31, 2025 in the Korean Intellectual Property Office, Korean Patent Application No.10-2025-0012543, filed on January 31, 2025 in the Korean Intellectual Property Office, Korean Patent Application No.10-2025-0012550, filed on January 31, 2025 in the Korean Intellectual Property Office and Korean Patent Application No.10-2025-0012551, filed on January 31, 2025 in the Korean Intellectual Property Office, the entire disclosure of each of the above-identified applications is incorporated herein by reference.

### BACKGROUND

### 1. Field of the Disclosure

The present disclosure relates to a separator for a rechargeable battery, and a rechargeable battery including the separator.

### 2. Discussion of Related Art

With increasing use of electronic devices such as, e.g., mobile phones, notebook computers, electric vehicles, and the like, that use batteries, the demand for secondary batteries having high energy density and high capacity is increasing. Therefore, improving the performance of rechargeable lithium batteries may be advantageous.

A rechargeable lithium battery typically includes a positive electrode and a negative electrode that contain an active material capable of the intercalation and deintercalation of lithium ions, and produces electric energy by oxidation and reduction reactions when the lithium ions are intercalated into and deintercalated from the positive electrode and the negative electrode.

A rechargeable lithium battery may include a separator between a positive electrode and a negative electrode. Reducing or preventing ignition and explosion of batteries due to external impact may be advantageous.

### SUMMARY

The present disclosure includes a separator for a rechargeable battery, which can inhibit the ignition and explosion of batteries due to external impact.

The present disclosure also includes a separator for a rechargeable battery, which has a low heat shrinkage rate and a high adhesion to a substrate.

The present disclosure also includes a separator for a rechargeable battery, which has a low heat shrinkage rate, low air permeability, and low resistance.

The present disclosure also includes a separator for a rechargeable battery, which improves a high-temperature lifespan of the battery.

The present disclosure also includes a separator for a rechargeable battery, which has improved shutdown temperature and breakdown voltage.

The present disclosure also includes a separator for a rechargeable battery, which improves a high-temperature lifespan of the battery.

The present disclosure also includes a rechargeable battery, which includes a positive electrode, a negative electrode, and the separator for a rechargeable battery located between the positive and negative electrodes.

One example embodiment includes a separator for a rechargeable battery.

The separator for a rechargeable battery includes a porous substrate, and a coating layer located on at least one surface of the porous substrate. The coating layer includes a crosslinked product of the mixture of a first binder and a second binder and a crosslinking agent; and a filler. The first binder is an aqueous binder, the second binder is a carboxyalkyl cellulose-based compound or a salt thereof, and the crosslinking agent contains citric acid, wherein the citric acid is included in a range of ≥ 5 parts by weight to ≤ 50 parts by weight with respect to 100 parts by weight of the total of the first and second binders.

Another example embodiment includes a separator for a rechargeable battery.

The separator for a rechargeable battery includes a porous substrate, and a coating layer located on at least one surface of the porous substrate. The coating layer is formed of or include a composition for a coating layer, which includes a first binder, a second binder, a filler, a crosslinking agent, and an alcohol. The first binder is an aqueous binder, the second binder is a carboxyalkyl cellulose-based compound or a salt thereof, and the crosslinking agent contains citric acid, wherein the citric acid is included in a range of ≥ 5 parts by weight to ≤ 50 parts by weight with respect to with respect to 100 parts by weight of the total of the first and second binders.

Still another example embodiment includes a separator for a rechargeable battery.

The separator for a rechargeable battery includes a porous substrate, and a coating layer located on at least one surface of the porous substrate. The coating layer includes a crosslinked product of the mixture of a first binder and a second binder and a crosslinking agent; and the mixture of a first filler and a second filter, and the first filler and the second filter have different aspect ratios. The first binder is an aqueous binder, the second binder is a carboxyalkyl cellulose-based compound or a salt thereof, the crosslinking agent contains citric acid, wherein the citric acid is contained in a range of ≥ 2 parts by weight to ≤ 50 parts by weight with respect to 100 parts by weight of the total of the first and second binders, and the second filler has a higher aspect ratio than the first filler. The weight ratio of the second filler to the first filler is in a range of about 1:1 to about 1:10.

Yet another example embodiment includes a separator for a rechargeable battery.

The separator for a rechargeable battery includes a porous substrate, and a coating layer located on at least one surface of the porous substrate. The coating layer includes a crosslinked product of the mixture of a first binder and a second binder and a crosslinking agent; a filler; and polymer particles with a melting point in a range of ≥ 80 °C to ≤ 135 °C. The first binder is an aqueous binder, the second binder is a carboxyalkyl cellulose-based compound or a salt thereof, and the crosslinking agent contains citric acid, wherein the citric acid is included in a range of ≥ 5 parts by weight to ≤ 50 parts by weight with respect to 100 parts by weight of the total of the first and second binders.

Yet another example embodiment includes a separator for a rechargeable battery.

The separator for a rechargeable battery includes a porous substrate, and a coating layer located on at least one surface of the porous substrate. The coating layer includes a crosslinked product of the mixture of a first binder and a second binder and a crosslinking agent; a filler; and lithium cations. The first binder is an aqueous binder, the second binder is an alkali metal salt of a carboxyalkyl cellulose-based compound, and at least one of the alkali metals is or includes lithium. The crosslinking agent contains citric acid, wherein the citric acid is included in a range of ≥ 5 parts by weight to ≤ 50 parts by weight with respect to 100 parts by weight of the total of the first and second binders, and the content of the lithium cations in the coating layer is in a range of ≥ 50 ppm to ≤ 200 ppm.

Yet another example embodiment includes a rechargeable battery.

The rechargeable battery includes a positive electrode, a negative electrode, and a separator for a rechargeable battery located between the positive electrode and the negative electrode.

The separator for a rechargeable battery according to one example embodiment may inhibit the ignition and explosion of a battery due to external impact, thereby increasing the reliability and stability of the battery. In addition, the separator may have a low heat shrinkage rate and high adhesion to a substrate, thereby increasing the lifespan of the battery.

The separator for a rechargeable battery according to one example embodiment may inhibit the ignition and explosion of a battery due to external impact, thereby increasing the reliability and stability of the battery. In addition, the separator may have a low heat shrinkage rate, low air permeability, and low resistance, thereby increasing the lifespan of the battery.

The separator for a rechargeable battery according to one example embodiment may inhibit the ignition and explosion of a battery due to external impact, thereby increasing the reliability and stability of the battery. In addition, the separator may provide a low shrinkage rate, thereby increasing the safety of a battery. In addition, the separator may improve the high-temperature lifespan of the battery, thereby increasing the lifespan and reliability of the battery.

The separator for a rechargeable battery according to one example embodiment may improve shutdown temperature and breakdown voltage, thereby providing a battery with enhanced safety. The separator for a rechargeable battery according to one example embodiment may have a low heat shrinkage rate, thereby providing a battery with desired or improved reliability and lifespan.

The separator for a rechargeable battery according to one example embodiment may replenish lithium ions that can be lost during repeated charging and discharging of a battery, thereby improving the battery lifespan at high temperatures.

### DETAILED DESCRIPTION

The above and other objects, features and advantages of the present disclosure may become more apparent to those of ordinary skill in the art by describing example embodiments thereof in detail with reference to the accompanying drawings, in which:
FIG. 1 is a cross-sectional view of a separator for a rechargeable lithium battery according to a first example embodiment;
FIG. 2 is a cross-sectional view of a separator for a rechargeable lithium battery according to a second example embodiment;
FIG. 3 is a cross-sectional view of a separator for a rechargeable lithium battery according to a third example embodiment;
FIG. 4 is a scanning electron microscope (SEM) image of a second filler;
FIG. 5 illustrates the aspect ratio of the second filler;
FIG. 6 is an SEM image of a first filler;
FIG. 7 illustrates the aspect ratio of the first filler;
FIG. 8 to FIG. 11 are each a cross-sectional view illustrating a separator for a rechargeable lithium battery according to a fourth example embodiment;
FIG. 12 is a cross-sectional view of a separator for a rechargeable lithium battery according to a fifth example embodiment; and
FIG. 13 to FIG. 16 are cross-sectional views schematically illustrating a rechargeable lithium battery according to one example embodiment.

### DETAILED DESCRIPTION

Hereinafter, example embodiments of the present disclosure is described in detail. However, the embodiments are presented as examples, and the present disclosure is not limited thereto, and the present disclosure is only defined by the scope of the appended claims.

Unless otherwise stated herein, when a part such as a layer, a membrane, an area, a plate, and the like, is described as being disposed "on" another part, it includes not only a case where the part is "directly on" another part, but also a case where there are other parts therebetween.

Unless otherwise stated herein, the singular may also include the plural. In addition, unless otherwise stated, the term "A or B" may mean "including A, including B, or including A and B."

In the present specification, "a combination thereof" may mean a mixture, stack, composite, copolymer, alloy, blend, or reaction product of constituents.

Unless otherwise defined herein, 'a particle size D100' may refer to a size of a particle with a cumulative volume of 100% by volume in a particle size distribution. The particle size distribution may be measured by methods known to those skilled in the art. For example, the particle size distribution may be measured using a particle size analyzer, a transmission electron microscope photograph, or a scanning electron microscope photograph. As another method, the particle size distribution may be obtained by measuring the particle size using a measuring device using dynamic light scattering, performing data analysis to count the number of particles for each particle size range, and then calculating the particle size D100 therefrom. Alternatively, the particle size distribution may be measured using a laser diffraction method. When measuring the particle size distribution by the laser diffraction method, for example, the particle size D100 based on 100% of a particle size distribution in the measuring device may be calculated by dispersing particles to be measured in a dispersion medium, then introducing the dispersion medium into a commercially available laser diffraction particle size measuring device (e.g., Microtrac's MT 3000), and radiating ultrasonic waves of about 28 kHz with an output of 60 W.

In this specification, 'a particle size D50' refers to the size of particles having a cumulative volume of 50% by volume in the particle size distribution. The particle size distribution can be obtained by referring to the method described in the above 'a particle size D100'.

If (when) the particle is spherical, the size may mean a diameter.

Hereinafter, unless otherwise defined, "substitution" means that hydrogen in a compound is substituted with a substituent such as or including at least one of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group (-NO₂), a cyano group (-CN), an amino group (-NRR') (here, R and R' are each independently hydrogen or a C1 to C6 alkyl group), a sulfobetaine group (-RR'N⁺(CH₂)ₙSO₃⁻, n is a natural number in a range from 1 to 10), a carboxybetaine group (-RR'N⁺(CH₂)ₙCOO⁻, n is a natural number in a range from 1 to 10) (here, R and R' are each independently a C1 to C20 alkyl group), an azido group (-N₃), an amidino group (-C(=NH)NH₂), a hydrazino group (-NHNH₂), a hydrazono group (=N(NH₂)), a carbamoyl group (-C(O)NH₂), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group (-SO₃H) or a salt thereof (-SO₃M, here, M denotes an organic or inorganic cation), a phosphate group (-PO₃H₂) or a salt thereof (-PO₃MH or - PO₃M₂, here, M denotes an organic or inorganic cation), and a combination thereof.

Hereinafter, the C1 to C3 alkyl group may be or include a methyl group, an ethyl group, or a propyl group. The C1 to C10 alkylene group may be, for example, a C1 to C6 alkylene group, a C1 to C5 alkylene group, or a C1 to C3 alkylene group and may be, for example, a methylene group, an ethylene group, or a propylene group. The C3 to C20 cycloalkylene group may be, for example, a C3 to C10 cycloalkylene group, or a C5 to C10 cycloalkylene group, for example, a cyclohexylene group. The C6 to C20 arylene group may be, for example, a C6 to C10 arylene group, for example, a phenylene group. The C3 to C20 heterocyclic group may be, for example, a C3 to C10 heterocyclic group, for example, a pyridine group.

Hereinafter, "hetero" means including one or more heteroatoms such as or including at least one of N, O, S, Si, and P.

In addition, in the chemical formulas, the symbol * refers to a part that is connected to the same or different atom, group, or structural unit. Unless otherwise specifically stated in the chemical formulas described herein, hydrogen may be considered to be bonded in the structure of the chemical formula.

Hereinafter, "alkali metal" refers to an element belonging to Group 1 of the periodic table, such as lithium, sodium, potassium, rubidium, cesium, or francium and may be present in a cationic or neutral state.

In the present specification, when describing a numerical range, "X to Y" means "X or more and Y or less (X≤ and ≤Y)."

When the terms "about" or "substantially" are used in this specification in connection with a numerical value, it is intended that the associated numerical value include a tolerance of ±10% around the stated numerical value. The expression "up to" includes amounts of zero to the expressed upper limit and all values therebetween. When ranges are specified, the range includes all values therebetween such as increments of 0.1%.

### Separator for secondary battery according to first example embodiment

According to one example embodiment, a separator for a rechargeable battery includes a porous substrate, and a coating layer located on at least one surface of the porous substrate. The coating layer includes a crosslinked product of the mixture of a first binder and a second binder and a crosslinking agent; and a filler. The first binder is an aqueous binder, the second binder is a carboxyalkyl cellulose-based compound or a salt thereof, and the crosslinking agent contains citric acid, wherein the citric acid is included in a range of ≥ 5 parts by weight to ≤ 50 parts by weight with respect to 100 parts by weight of the total of the first and second binders.

According to one example embodiment, the separator may be a separator for a rechargeable lithium battery.

The separator may provide a low dry heat shrinkage rate. In one example embodiment, a dry shrinkage rate in each of the machine direction (MD) and a transverse direction (TD) of the separator may be about 6% or less, for example, 5% or less, measured after being left for 1 hour at 150 °C. Here, the MD and TD may each be the same direction as the directions of the porous substrate.

The citric acid may be crosslinked with the first binder, thereby lowering a heat shrinkage rate of the separator in an electrolyte. In one example embodiment, the heat shrinkage rate of the separator in each of the MD and TD may be about 10.0% or less, for example, 8% or less, measured after being left in an electrolyte for 1 hour at 150 °C.

Since the separator includes a crosslinked product of the first binder, the second binder, and the crosslinking agent, that is, a crosslinked product of the first binder, a carboxyalkyl cellulose-based compound or a salt thereof, and citric acid, the separator can inhibit the ignition and explosion of a battery due to external impact, thereby increasing the reliability and stability of the battery, and can facilitate an increase in the adhesion to the substrate.

The citric acid is a polycarboxylic acid having hydroxyl groups, as shown in the chemical formula below.

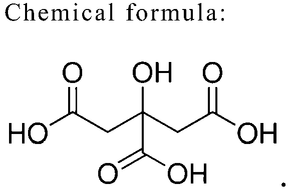

The citric acid may be crosslinked with the carboxyalkyl cellulose-based compound or a salt thereof, and also crosslinked with the first binder. The citric acid has high dispersibility in the mixture of the first binder and the carboxyalkyl cellulose-based compound or a salt thereof, and is highly crosslinked with each of the first binder and the carboxyalkyl cellulose-based compound or a salt thereof, and therefore the citric acid can facilitate an increase in the modulus of the coating layer. Increasing the modulus facilitates the inhibition of battery ignition and explosion caused by external impact.

The citric acid is included in a range of ≥ 5 parts by weight to ≤ 50 parts by weight with respect to 100 parts by weight of the total of the first and second binders. When the content of the citric acid is less than about 5 parts by weight with respect to a total of 100 parts by weight, the minimal increase in the modulus of the coating layer may reduce the effect of inhibiting battery ignition and explosion caused by external impact. When the content of the citric acid is more than 50 parts by weight with respect to a total of 100 parts by weight, due to the low substrate adhesion of the separator, separation between the coating layer and the substrate occurs in the separator, thereby degrading reliability. In one example embodiment, the citric acid may be included at 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 parts by weight, 10 to 50 parts by weight, or 10 to 20 parts by weight with respect to a total of 100 parts by weight. Within the above range, the significant effects of the separator described above may be exhibited.

In one example embodiment, the substrate adhesion of the separator may be about 2 N or more. Here, the "substrate" may be or include a porous substrate that is described below, for example, a polyethylene-based substrate.

In one example embodiment, the total of the first binder and the second binder may be about 95 wt% or more, for example, a range of ≥ 95 wt% to ≤ 100 wt%, 99 to 100 wt%, or 100 wt% of the mixture. Within the above range, the above-described effects of the separator can be readily achieved.

In one example embodiment, the citric acid may be included at about 95 wt% or more, for example, in a range of ≥ 95 wt% to ≤ 100 wt%, 99 to 100 wt%, or 100 wt% of the crosslinking agent. Within the above range, the above-described effects of the separator can be readily achieved.

In one example embodiment, the crosslinked product may be or include a thermally crosslinked product.

In one example embodiment, the coating layer may be formed of or include a composition for a first coating layer, which includes the first binder, the second binder, that is, the carboxyalkyl cellulose-based compound or a salt thereof, the crosslinking agent, such as citric acid, and a filler.

Hereinafter, each component of the composition for a first coating layer is described in detail.

### First binder

The first binder may be included at a desired content with respect to the second binder. The first binder and the second binder may be included in a weight ratio (the first binder : the second binder) in a range of about 80:20 to about 20:80 with respect to 100 parts by weight of the total of the first binder and the second binder. Within the above range, the separator may exhibit a lower dry heat shrinkage rate, a lower heat shrinkage rate in an electrolyte, higher substrate adhesion, and higher cell stability due to external impact. For example, the weight ratio of the first binder to the second binder may be 80:20, 75:25, 70:30, 65:35, 60:40, 55:45, 50:50, 45:55, 40:60, 35:65, 30:70, 25:75, 20:80, 80:20 to 25:75, or 80:20 to 30:70. Within the above range, the significant effects of the separator described above may be exhibited.

The first binder is an aqueous binder. Since the aqueous binder has high dispersibility in the composition for a coating layer, which includes carboxyalkyl cellulose or a salt thereof and citric acid, it may be possible to achieve the effects of the separator.

The first binder may be an aqueous heat-resistant binder, which may be or include a (meth)acrylic binder.

The first binder may include one or more of the crosslinking units with the citric acid, for example, the unit derived from (meth)acrylic acid or a salt thereof, the unit derived from (meth)acrylamide, the unit derived from hydroxyalkyl (meth)acrylate, the unit derived from (met)acrylonitrile, the unit derived from (meth)acrylamido-2-methylpropanesulfonic acid and a salt thereof, and the unit derived from ethyleneimine.

In one example embodiment, the crosslinking unit with the citric acid may be included in a range of ≥ 10 mol% to ≤ 100 mol%, for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 100 mol%, or 10 to 95 mol%, for example, 30 to 95 mol% of the first binder. Within the above range, the modulus of the coating layer may be increased, and an increase in air permeability resulting from the substantially or excessively high modulus of the coating layer can be reduced or prevented.

The (meth)acrylic binder may include a structural unit containing a sulfonate group. The structural unit containing a sulfonate group may be beneficial for improving the heat resistance and membrane resistance of the separator.

The structural unit containing a sulfonate group may be included in a range of ≥ 0.1 mol% to ≤ 65 mol%, for example, 0.1 to 60 mol%, 0.1 to 20 mol%, 0.1 to 10 mol%, 1 to 20 mol%, for example, 1 to 10 mol%, or for example, 20 to 65 mol%, or 30 to 65 mol% of the (meth)acrylic binder. When the structural unit containing a sulfonate group falls within the above range, the separator may exhibit desired or improved adhesion, heat resistance, air permeability, and oxidation resistance.

The (meth)acrylic binder may further include one or more of a structural unit derived from (meth)acrylate or (meth)acrylic acid, a structural unit containing a cyano group, and a structural unit derived from (meth)acryl amide.

For example, the (meth)acrylic binder may include a structural unit derived from (meth)acrylate or (meth)acrylic acid, or a structural unit derived from (meth)acrylamide, and for example, a structural unit derived from (meth)acrylic acid. The structural units derived from (meth)acrylic acid and (meth)acrylamide may provide a crosslink site with the citric acid.

The structural unit derived from (meth)acrylate or (meth)acrylic acid may be included in a range of ≥ 0 mol% to ≤ 70 mol%, for example, 10 to 70 mol%, 10 to 60 mol%, 20 to 60 mol%, 10 to 50 mol%, 30 to 60 mol%, 10 to 40 mol%, or 40 to 55 mol% of the (meth)acrylic binder. Within the above range, the separator may exhibit desired or improved adhesion, heat resistance, air permeability, and oxidation resistance.

The structural unit containing a cyano group may be included in a range of ≥ 0 mol% to ≤ 85 mol%, for example, 30 to 85 mol%, 30 to 70 mol%, 30 to 60 mol%, 35 to 60 mol%, or 35 to 55 mol% of the (meth)acrylic binder. Within the above range, the separator may ensure desired or improved oxidation resistance, and exhibit adhesion, heat resistance, and air permeability.

The structural unit derived from (meth)acrylamide may be included in a range of ≥ 0 mol% to ≤ 95 mol%, for example, 40 to 85 mol%, 50 to 85 mol%, 55 to 95 mol%, 60 to 85 mol%, 75 to 95 mol%, or 80 to 95 mol% of the (meth)acrylic binder. Within the above range, the separator may ensure desired or improved oxidation resistance, and exhibit adhesion, heat resistance, and air permeability.

According to one example embodiment, the (meth)acrylic binder may have a range of ≥ 0.1mol% to ≤ 30 mol%, for example, 0.1 to 10 mol%, of a structural unit containing a sulfonate group, a range of ≥ 10 mol% to ≤ 60 mol%, for example, 10 to 40 mol% of a structural unit derived from (meth)acrylate or (meth)acrylic acid, and a range of ≥ 30 mol% to ≤ 85 mol%, for example, 30 to 80 mol% of a structural unit containing a cyano group (referred to as binder 1-1). In one example embodiment, the total of the structural unit containing a sulfonate group, the structural unit derived from (meth)acrylate or (meth)acrylic acid, and the structural unit containing a cyano group may be included at about 95 mol% or more, for example, 95 to 100 mol%, or 100 mol% with respect to 100 mol% of the (meth)acrylic binder.

According to another example embodiment, the (meth)acrylic binder may have a range of ≥ 1 mol% to ≤ 20 mol%, for example, 5 to 20 mol% of a structural unit containing a sulfonate group, and a range of ≥ 80 mol% to ≤ 99 mol%, for example, 80 to 95 mol% of a structural unit derived from (meth)acryl amide (referred to as binder 1-2). In one example embodiment, the total of the structural unit containing a sulfonate group and the structural unit derived from (meth)acryl amide may be included at about 95 mol% or more, for example, 95 to 100 mol%, or 100 mol% with respect to 100 mol% of the (meth)acrylic binder.

According to still another example embodiment, the (meth)acrylic binder may have a structural unit containing a sulfonate group, a structural unit derived from (meth)acrylate or (meth)acrylic acid, and a structural unit derived from (meth)acryl amide (referred to as binder 1-3). In one example embodiment, the total of the structural unit containing a sulfonate group, the structural unit derived from (meth)acrylate or (meth)acrylic acid, and the structural unit derived from (meth)acryl amide may be included at about 95 mol% or more, for example, 95 to 100 mol%, or 100 mol% with respect to 100 mol% of the (meth)acrylic binder.

For example, the (meth)acrylic binder may be the binder 1-1 or the binder 1-2. The binder 1-1 or the binder 1-2 may have better effects of improving membrane resistance and heat resistance.

Each structural unit of the (meth)acrylic binder is described in detail below.

The structural unit derived from (meth)acrylate or (meth)acrylic acid may be represented by, for example, at least one of Chemical Formula 1, 2, or 3 below, or a combination thereof: 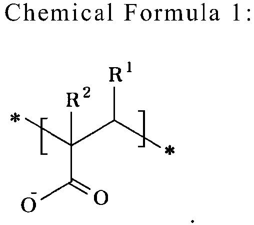 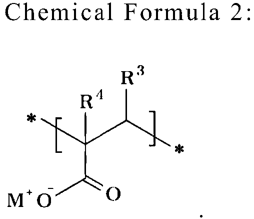 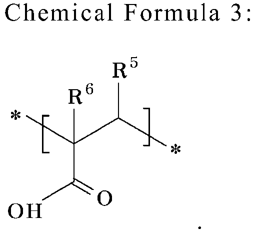 In Chemical Formulas 1 to 3,
R¹ to R⁶ each independently is or includes hydrogen or a methyl group, and
in Chemical Formula 2,
M is or includes an alkali metal.

The alkali metal may be or include, for example, lithium, sodium, potassium, rubidium, or cesium.

In one example, the structural unit derived from (meth)acrylate or (meth)acrylic acid may include the structural unit represented by Chemical Formula 2, and the structural unit represented by Chemical Formula 3. In this case, the structural unit represented by Chemical Formula 2 and the structural unit represented by Chemical Formula 3 may be included in a molar ratio in a range of about 10:1 to 1:2, 10:1 to 1:1, or 5:1 to 1:1.

The structural unit containing a cyano group may be represented by, for example, Chemical Formula 4 below. 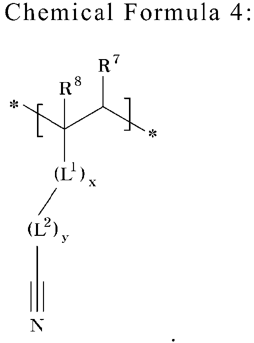 In Chemical Formula 4,
R⁷ and R⁸ each independently is or includes hydrogen or a C1 to C3 alkyl group,
L¹ is or includes -C(=O)-, -C(=O)O-, -OC(=O)-, -O-, or -C(=O)NH-,
x is an integer ranging from 0 to 2,
L² is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, and
y is an integer ranging from 0 to 2.

The structural unit containing a cyano group may be or include, for example, a structural unit induced from (meth)acrylonitrile, alkenenitrile, cyanoalkyl(meth)acrylate, or 2-(vinyloxy)alkanenitrile. Here, the alkene may be a C2 to C20 alkene, a C2 to C10 alkene, or a C2 to C6 alkene, the alkyl may be a C1 to C20 alkyl, a C1 to C10 alkyl, or a C1 to C6 alkyl, and the alkane may be a C1 to C20 alkane, a C1 to C10 alkane, or a C1 to C6 alkane.

The alkenenitrile may be, for example, allyl cyanide, 4-pentenenitrile, 3-pentenenitrile, 2-pentenenitrile, or 5-hexenenitrile. The cyanoalkyl(meth)acrylate may be, for example, cyanomethyl(meth)acrylate, cyanoethyl(meth)acrylate, cyanopropyl(meth)acrylate, or cyanooctyl(meth)acrylate. The 2-(vinyloxy)alkanenitrile may be, for example, 2-(vinyloxy)ethanenitrile, or 2-(vinyloxy)propanenitrile.

The structural unit containing a sulfonate group may be or include a structural unit containing a conjugate base of sulfonic acid, sulfonate, sulfonic acid ester, or a derivative thereof. For example, the structural unit containing a sulfonate group may be represented by at least one of Chemical Formula 5, 6, or 7 below, or a combination thereof. 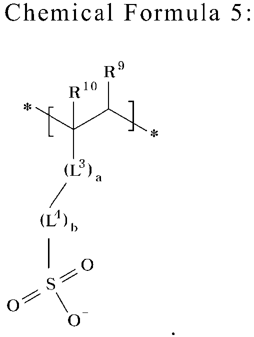 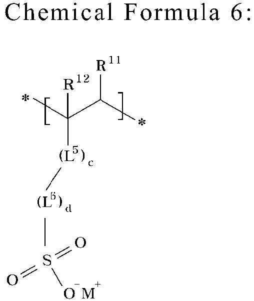 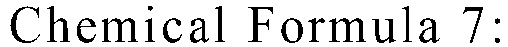 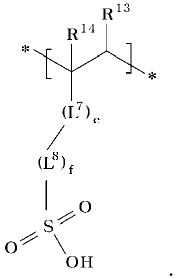 In Chemical Formulas 5 to 7,
R⁹ to R¹⁴ each independently is or includes hydrogen or a C1 to C3 alkyl group,
L³, L⁵, and L⁷ each independently is or includes -C(=O)-, -C(=O)O-, - OC(=O)-, -O-, or -C(=O)NH-,
L⁴, L⁶, and L⁸ each independently is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, and
a, b, c, d, e, and f are each independently an integer ranging from 0 to 2, and
in Chemical Formula 6,
M is or includes an alkali metal.

As an example, in Chemical Formulas 5 to 7,
L³, L⁵, and L⁷ may each independently be or include -C(=O)NH-,
L⁴, L⁶, and L⁸ may each independently be or include a C1 to C10 alkylene group, and
a, b, c, d, e, and f may be equal to 1.

The structural unit containing a sulfonate group may include only one, or two or more, of a structural unit represented by Chemical Formula 5, a structural unit represented by Chemical Formula 6, and a structural unit represented by Chemical Formula 7. In one example, the structural unit containing a sulfonate group may include a structural unit represented by Chemical Formula 6, and in another example, the structural unit containing a sulfonate group may include a structural unit represented by Chemical Formula 6 and a structural unit represented by Chemical Formula 7.

The structural unit containing a sulfonate group may be or include, for example, a structural unit induced from vinyl sulfonic acid, allyl sulfonic acid, styrene sulfonic acid, anethole sulfonic acid, (meth)acrylamidoalkane sulfonic acid, sulfoalkyl (meth)acrylate, or a salt thereof. Here, the alkane may be a C1 to C20 alkane, a C1 to C10 alkane, or a C1 to C6 alkane, and the alkyl may be a C1 to C20 alkyl, a C1 to C10 alkyl, or a C1 to C6 alkyl. The salt may consist of the above-described sulfonic acid and a desired ion. The ion may be or include, for example, an alkali metal ion, and in this case, the salt may be or include a sulfonic acid alkali metal salt.

The (meth)acrylamidoalkane sulfonic acid may be or include, for example, 2-(meth)acrylamido-2-methylpropane sulfonic acid, and the sulfoalkyl (meth)acrylate may be or include, for example, 2-sulfoethyl (meth)acrylate, or 3-sulfopropyl (meth)acrylate.

The structural unit derived from (meth)acrylamide may be represented by Chemical Formula 8 below. 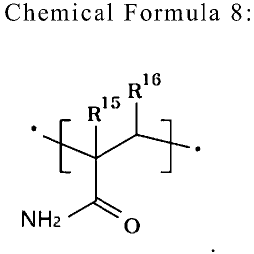 (In Chemical Formula 8,
R¹⁵ and R¹⁶ each independently is or includes hydrogen or a methyl group).

The (meth)acrylic binder may include an alkali metal. The alkali metal may be present in the form of a cation, and may be or include, for example, lithium, sodium, potassium, rubidium, or cesium. For example, the alkali metal may be conjugated with the (meth)acrylic binder and present in the form of a salt. The alkali metal may help the synthesis of the (meth)acrylic binder in an aqueous solvent, improve the adhesion of the coating layer, and improve the heat resistance, air permeability, and oxidation resistance of the separator.

The alkali metal may be included in a range of ≥ 1 wt% to ≤ 40 wt%, for example, 1 to 30 wt%, 1 to 20 wt%, or 10 to 20 wt% of the alkali metal and the (meth)acrylic binder. For example, the (meth)acrylic binder and the alkali metal may be included in a weight ratio in a range of about 99:1 to about 60:40 or 99:1 to 70:30, for example, 99:1 to 80:20, or for example, 90:10 to 80:20.

In addition, the alkali metal may be included in a range of ≥ 0.1 mol% to ≤ 1.0 mol% with respect to the total content of the alkali metal and the (meth)acrylic binder. When the alkali metal falls within the above range, the coating layer may have desired or improved adhesion, and a separator including the same may exhibit desired or improved heat resistance, air permeability, and oxidation resistance.

The (meth)acrylic binder may be present in various forms, such as an alternating copolymer in which the structural units are alternately distributed, a random copolymer in which the structural units are distributed arbitrarily, or a graft copolymer in which some structural units are grafted.

The weight average molecular weight (Mw) of the (meth)acrylic binder may be in a range of ≥ 200,000 g/mol to ≤ 700,000 g/mol, for example, 200,000 to 600,000 g/mol, or 300,000 to 600,000 g/mol. Within the above range, the separator may exhibit desired or improved adhesion, heat resistance, air permeability, and oxidation resistance. In the present specification, the weight average molecular weight may be a polystyrene-converted average molecular weight, which is measured using, e.g., gel permeation chromatography (GPC).

The glass transition temperature of the (meth)acrylic binder may be in a range of ≥ 200 °C to ≤ 280 °C, 210 to 270 °C, or 210 to 260 °C. Within the above range, the separator may exhibit desired or improved heat resistance, air permeability, and oxidation resistance. The glass transition temperature may be a value measured by, e.g., differential scanning calorimetry (DSC).

The (meth)acrylic binder may have a melting point (Tm) of about 160 °C or more.

In the present specification, the "melting point" may be measured by the following method:
Using a differential scanning calorimeter (DSC, apparatus name: DSC Q20, manufacturer: TA instrument), the temperature was increased to heat a material to be measured to 200 °C at 10 °C/min (Cycle 1), cooled to 40 °C at 10 °C/min following isothermality for 1 minute at 200 °C, and then re-heated to 200 °C at 10 °C/min following isothermality for 1 minute at 40 °C (Cycle 2). The temperature at the maximum point of the endothermic peak in the resulting DSC curve was measured as the melting temperature (*Tₘ,* °C), and the temperature at the maximum point of the exothermic peak was measured as the crystallization temperature (*T_{c}, °C).* Here, the melting temperature (*Tₘ*) and the crystallization temperature (*T_{c}*) are both presented as results measured during the second cycle (Cycle 2) where the temperature was rising and falling.

The (meth)acrylic binder may be prepared by a solution polymerization method.

According to one example embodiment, the (meth)acrylic binder may be included in the coating layer of the separator in the form of a film.

### Second binder

The second binder is or includes a carboxyalkyl cellulose-based compound or a salt thereof. When combined with the first binder described above, and citric acid, the carboxyalkyl cellulose-based compound or a salt thereof may facilitate the inhibition of battery ignition and explosion caused by external impact due to high substrate adhesion. For example, the second binder may be or include carboxymethyl cellulose or an alkali metal salt thereof, for example, a sodium salt of carboxymethyl cellulose.

The carboxyalkyl cellulose-based compound or a salt thereof may havea weight average molecular weight in a range of ≥ 50,000 g/mol to ≤ 1,000,000 g/mol, for example, 100,000 to 600,000 g/mol. Within the above range, since the viscosity of the composition for a coating layer does not become substantially or excessively high, it can be possible to ensure the dispersibility of citric acid.

### Citric acid

Citric acid may be included in a range of ≥ 4 parts by weight to ≤ 200 parts by weight, for example, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 105, 110, 115, 120, 125, 130, 135, 140, 145, 150, 155, 160, 165, 170, 175, 180, 185, 190, 195, or 200 parts by weight, in a range of ≥ 5 parts by weight to ≤ 200 parts by weight, or 10 to 100 parts by weight with respect to 100 parts by weight of the first binder. Within the above range, it can be possible to inhibit battery ignition and explosion caused by external impact, and provide a low heat shrinkage rate and high adhesion to a substrate.

Citric acid may be included in a range of ≥ 4 parts by weight to ≤ 200 parts by weight, for example, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 105, 110, 115, 120, 125, 130, 135, 140, 145, 150, 155, 160, 165, 170, 175, 180, 185, 190, 195, or 200 parts by weight, 5 to 200 parts by weight, 4 to 100 parts by weight, 4 to 50 parts by weight, or 10 to 100 parts by weight with respect to 100 parts by weight of the second binder. Within the above range, it can be possible to inhibit battery ignition and explosion caused by external impact, and provide a low heat shrinkage rate and high adhesion to a substrate.

### Filler

The filler may have a particle size (D100) of about 0.7 µm or less. Within the above range, it can be possible to achieve the dry shrinkage rate, and a shrinkage rate in an electrolyte in the separator. For example, the filler may have a particle size (D100) of 0.05, 0.1, 0.15, 0.2, 0.25, 0.3, 0.35, 0.4, 0.45, 0.5, 0.55, 0.6, 0.65, or 0.7 µm, 0.55 µm or less, or 0.3 to 0.5 µm.

According to one example embodiment, the filler may have a particle size (D50) of about 0.4 µm or less, 0.05, 0.1, 0.15, 0.2, 0.25, 0.3, 0.35, or 0.4 µm, for example, 0.35 µm or less, for example, 0.1 to 0.3 µm. Within the above range, the separator can exhibit a heat resistance improvement effect.

The filler may be or include, for example, an inorganic filler, an organic filler, an inorganic/organic composite filler, or a combination thereof. The inorganic filler may be or include a ceramic material that can improve heat resistance. The inorganic filler may include, for example, at least one of a metal oxide, a quasi-metal oxide, a metal fluoride, a metal hydroxide, or a combination thereof. The inorganic filler may include, for example, at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but the present disclosure is not limited thereto. The organic filler may include at least one of an acryl compound, an imide compound, an amide compound, or a combination thereof, but the present disclosure is not limited thereto. The organic filler may have a core-shell structure, but the present disclosure is not limited thereto. For example, the filler may include at least one or more of boehmite, Al₂O₃, BaTiO₃, and Mg(OH)₂.

The filler may be spherical, plate-shaped, cubic, or amorphous. Preferably, the filler may be plate-shaped or cubic.

The mass ratio of the mixture of the first binder and the second binder: the filler may be in a range of about 1:10 to about 1:50, for example, 1:10, 1:15, 1:20, 1:25, 1:30, 1:35, 1:40, 1:45, 1:50, or 1:20 to 1:30 with respect to the mixture of the first binder and the second binder. Within the above range, the separator can exhibit an increase in adhesion.

The filler may be included in a range of ≥ 50 wt% to ≤ 99 wt%, for example, 70 to 99 wt%, for example, 75 to 99 wt%, for example, 80 to 99 wt%, for example, 85 to 99 wt%, for example, 90 to 99 wt%, or for example, 95 to 99 wt% with respect to the total weight of the coating layer. When the filler falls within the above range, desired or improved heat resistance, durability, oxidation resistance, and stability can be exhibited.

The coating layer may have a thickness in a range of ≥ 0.01 µm to ≤ 20 µm, for example, 1 to 10 µm, 1 to 5 µm, or 1 to 3 µm.

The ratio of the thickness of the coating layer to the thickness of the porous substrate may be in a range of ≥ 0.05 to ≤ 0.5, for example, 0.05 to 0.4, 0.05 to 0.3, or 0.1 to 0.2. Within the above range, a separator may exhibit desired or improved air permeability, heat resistance, and adhesion. "Thickness of the coating layer" used herein means the thickness of one coating layer when the coating layer is formed on only one surface of the porous substrate, or the thickness of two coating layers when the coating layer is formed on both surfaces of the porous substrate.

The coating layer may be formed by coating the porous substrate with the composition for a coating layer to a desired or predetermined thickness, and aging the resulting porous substrate for about 15 hours or more, for example, in a range of ≥ 15 hours to ≤ 24 hours, at a temperature in a range of ≥ 85 °C to ≤ 120 °C.

### Porous substrate

A porous substrate may be or include a substrate with multiple pores that is conventionally used in an electrochemical device. The porous substrate may be unlimitedly a polymer film formed of or including any one polymer such as or including at least one of polyolefins such as polyethylene, polypropylene, and the like, polyesters such as polyethyleneterephthalate, polybutyleneterephthalate, and the like, polyacetal, polyamide, polyimide, polycarbonate, polyetheretherketone, polyaryletherketone, polyetherimide, polyamideimide, polybenzimidazole, polyethersulfone, polyphenyleneoxide, a cyclic olefin copolymer, polyphenylenesulfide, polyethyelenenaphthalate, glass fibers, Teflon, and polytetrafluoroethylene, or a copolymer or mixture of two or more thereof.

The porous substrate may be or include, for example, a polyolefin-based substrate including a polyolefin, and the polyolefin-based substrate may contribute to the improvement in battery safety due to a desired or improved shutdown function. For example, the polyolefin-based substrate may be or include at least one of a polyethylene single membrane, a polypropylene single-layer membrane, a polyethylene/polypropylene double-layer membrane, a polypropylene/polyethylene/polypropylene triple-layer membrane, and a polyethylene/polypropylene/polyethylene triple-layer membrane. In addition, aside from an olefin resin, the polyolefin-based resin may include a non-olefin resin or a copolymer of an olefin monomer and a non-olefin monomer.

The porous substrate may have a thickness of in a range of ≥ 1 to ≤ 40 µm, for example, 1 to 30 µm, 1 to 20 µm, or 5 to 15 µm.

The separator for a rechargeable lithium battery according to one example embodiment may exhibit desired or improved air permeability, and may have an air permeability value of less than about 200 sec/100 cc, for example, 190 sec/100 cc or less, or 180 sec/100 cc or less. That is, the separator may have an air permeability of less than about 40 sec/100 cc·1 µm, for example, 30 sec/100 cc·1 µm or less, or 25 sec/100 cc·1 µm or less per unit thickness. Here, the air permeability is the time (seconds) it takes for 100 cc of air to pass through the unit thickness of the separator. The air permeability per unit thickness may be obtained by measuring the air permeability for the total thickness of the separator and dividing the air permeability by the thickness. The air permeability may be measured by using an air permeability measuring device (Asahi Seiko, EG01-55-1MR) to measure the time (seconds) it takes for 100 cc of air to pass through.

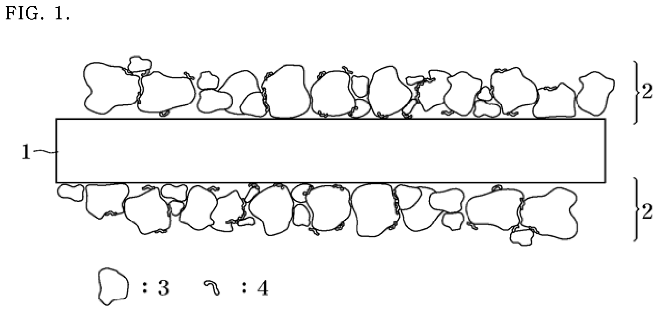

FIG. 1 is a cross-sectional view of a separator for a rechargeable battery according to one example embodiment.

Referring to FIG. 1, the separator for a rechargeable lithium battery includes a porous substrate 1, and a coating layer 2 located on both surfaces of the porous substrate 1. The coating layer 2 includes a filler 3, and a crosslinked product 4 of a first binder, a second binder, and a crosslinking agent.

The composition for a coating layer of the separator may further include an alcohol, which is described below.

### Separator for rechargeable battery according to second example embodiment

The separator may inhibit battery ignition and explosion due to external impact. In addition, the separator may provide a low heat shrinkage rate, low air permeability, and low resistance.

The separator includes a porous substrate, and a coating layer located on at least one surface of the porous substrate. The coating layer is formed of or include a composition including a first binder, a second binder, a crosslinking agent, a filler, and an alcohol, wherein the first binder is an aqueous binder, the second binder is a carboxyalkyl cellulose-based compound or a salt thereof, and the crosslinking agent contains citric acid. The citric acid is included in a range of ≥ 5 parts by weight to ≤ 50 parts by weight with respect to 100 parts by weight of the total of the first and second binders.

The separator may provide a low dry heat shrinkage rate. In one example embodiment, the separator may have a dry shrinkage rate of about 5% or less in each of the machine direction (MD) and the transverse direction (TD), measured after being left for 1 hour at 150 °C.

The citric acid may be crosslinked with the first binder, thereby lowering a heat shrinkage rate of the separator in an electrolyte. In one example embodiment, the separator may have a heat shrinkage rate in each of the MD and TD of about 10% or less, measured after being left for 1 hour in an electrolyte at 150 °C.

Since the separator may include a coating layer formed of or including a composition including the first binder, the second binder, the crosslinking agent, and the filler, the separator can inhibit battery ignition and explosion due to external impact, thereby increasing the reliability and stability of a battery.

The citric acid may be crosslinked with a carboxyalkyl cellulose-based compound or a salt thereof, and may also be crosslinked with the first binder. Due to high dispersity in the mixture of the first binder and a carboxyalkyl cellulose-based compound or a salt thereof, the citric acid may be highly crosslinked to each of the first binder and the carboxyalkyl cellulose-based compound or a salt thereof, thereby facilitating the increase in the modulus of the coating layer. As the modulus of the coating layer increases, it can be possible to inhibit battery ignition and explosion due to external impact.

The citric acid is included in a range of ≥ 5 parts by weight to ≤ 50 parts by weight with respect to 100 parts by weight of the total of the first and second binders. When the citric acid is included at less than about 5 parts by weight with respect to 100 parts by weight of the total of the first and second binders, an insignificant increase in the modulus of the coating layer can reduce the effect of inhibiting battery ignition and explosion due to external impact. When the citric acid is included at more than about 50 parts by weight with respect to 100 parts by weight of the total of the first and second binders, the substrate adhesion of the separator is lowered, and thus the separation between the coating layer of the separator and the substrate occurs, thereby degrading reliability. In one example embodiment, the citric acid may be included in a range of ≥ 10 parts by weight to ≤ 50 parts by weight, for example, 10 to 20 parts by weight with respect to 100 parts by weight of the total of the first and second binders. Within the above range, the significant effects of the separator described above may be exhibited.

The coating layer may be formed by thermally curing (aging) a composition including the first binder, the second binder, that is, the carboxyalkyl cellulose-based compound or a salt thereof, the crosslinking agent, that is, citric acid, and the filler. The thermal curing may include first crosslinking between the citric acid and the first binder, and second crosslinking between the citric acid and the second binder. In the first and second crosslinking, by-products, including citric products formed by the dehydration reaction of citric acid itself, may be produced. The by-products may reduce the crosslinking density of the coating layer and increase the air permeability and resistance of the separator. The by-products are caused by dehydration of the citric acid, and may include a cyclic compound such as a cyclic anhydride, and/or aconitic acid, but the present disclosure is not limited thereto.

The alcohol may volatilize during the crosslinking reaction, which can accelerate dehydration and promote crosslinking. However, the by-products may not readily volatilize, and therefore cannot promote crosslinking. Particularly, since the coating layer is an aqueous coating layer using water as a solvent, the alcohol may not only be readily miscible within the composition but may also readily volatilize. Particularly, since a separator containing a salt, for example, MgSO₄, instead of an alcohol, has a low crosslinking degree, its air permeability and resistance are desired or improved, but the separator may yield adverse results regarding external impact.

In one example embodiment, the separator may have air permeability of about 140 sec/100 cc or less, for example, 105 sec/100 cc or less.

In one example embodiment, the separator may have a resistance of about 0.8 Ω or less, for example, 0.6 Ω or less.

In one example embodiment, the thermal curing may include aging for about 15 hours or more, for example, a range of ≥ 15 hours to ≤ 24 hours at a temperature in a range of ≥ 85 °C to ≤ 120 °C.

In one example embodiment, the total of the first and second binders may be about 95 wt% or more, for example, in a range of ≥ 95 wt% to ≤ 100 wt%, 99 to 100 wt%, or 100 wt% of the mixture. Within the above range, the above-described effects of the separator can be readily achieved.

In one example embodiment, the citric acid may be about 95 wt% or more, for example, in a range of ≥ 95 wt% to ≤ 100 wt%, 99 to 100 wt%, or 100 wt% of the crosslinking agent. Within the above range, the above-described effects of the separator can be readily achieved.

In one example embodiment, the crosslinked product may be or include a thermally crosslinked product.

Hereinafter, each component of the composition for a coating layer is described in detail.

### First binder

The first binder is substantially the same as the first binder described in "Separator for rechargeable battery according to first example embodiment." Therefore, the detailed description of the first binder is omitted.

### Second binder

The second binder is substantially the same as the second binder described in "Separator for rechargeable battery according to first example embodiment." Therefore, the detailed description of the second binder is omitted.

### Citric acid

The citric acid is substantially the same as the citric acid described in "Separator for rechargeable battery according to first example embodiment." Therefore, the detailed description of the citric acid is omitted.

### Filler

The filler is substantially the same as the filler described in "Separator for rechargeable battery according to first example embodiment." Therefore, the detailed description of the filler is omitted.

### Alcohol

The alcohol volatilizes at the crosslinking temperature, and is not particularly limited as long as the alcohol is a type that can volatilize by-products during volatilization.

In one example embodiment, the alcohol may have a boiling point of ≥ 60 °C or more, for example, in a range of ≥ 60 °C to ≤ 85 °C. Within the above range, the alcohol may readily volatilize at the crosslinking temperature.

In one example embodiment, the alcohol is a linear or branched monohydric alcohol having a range of 1 to 4 carbon atoms in the main chain, and may include, for example, ethanol, methanol, isopropyl alcohol, n-butanol, and the like.

The alcohol may be included in a range of ≥ 5 parts by weight to ≤ 50 parts by weight, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 parts by weight, 5 to 30 parts by weight, 5 to 20 parts by weight, or 10 to 20 parts by weight with respect to 100 parts by weight of the first binder. Within the above range, air permeability and resistance can be improved by the removal of the by-products, and degradation in the physical properties of the coating layer can be reduced or prevented due to the residue in the coating layer.

The alcohol may be included in a range of ≥ 5 parts by weight to ≤ 50 parts by weight, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 parts by weight, 5 to 30 parts by weight, 5 to 20 parts by weight, or 10 to 30 parts by weight with respect to 100 parts by weight of the second binder. Within the above range, air permeability and resistance can be improved by the removal of the by-products, and degradation in the physical properties of the coating layer can be reduced or prevented due to the residue in the coating layer.

### Porous substrate

The porous substrate is substantially the same as the porous substrate described in "Separator for rechargeable battery according to first example embodiment." Therefore, the detailed description of the porous substrate is omitted.

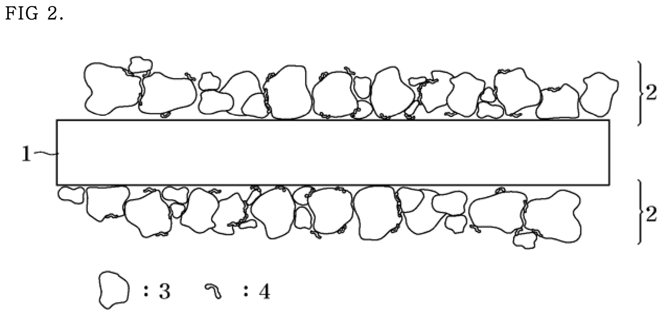

FIG. 2 is a cross-sectional view of a separator for a rechargeable lithium battery according to one example embodiment.

Referring to FIG. 2, the separator for a rechargeable lithium battery includes a porous substrate 1, and a coating layer 2 located on both surfaces of the porous substrate 1. The coating layer 2 includes a filler 3, and a crosslinked product 4 of a first binder, a second binder, and a crosslinking agent. The coating layer 2 is formed of or include a composition including a first binder, a second binder, a crosslinking agent, a filler, and an alcohol.

The filler in the coating layer of the separator may include the mixture of the first filler and the second filler, which have different aspect ratios. Therefore, the filler is described below.

### Separator for rechargeable battery according to third example embodiment

The separator may inhibit battery ignition and explosion due to external impact. The separator may have a low heat shrinkage rate. The separator may improve a high-temperature lifespan of the battery.

The separator may inhibit battery ignition and explosion due to external impact, thereby increasing the reliability and stability of the battery. In addition, the separator may provide a low shrinkage rate, thereby increasing the safety of the battery. In addition, the separator may improve the high-temperature lifespan of the battery, thereby increasing the lifespan and reliability of the battery.

According to one example embodiment, the separator includes a porous substrate, and a coating layer located on at least one surface of the porous substrate, wherein the coating layer includes a crosslinked product of the mixture of a first binder and a second binder, and a crosslinking agent; and the mixture of first and second fillers with different aspect ratios. The first binder is or includes an aqueous binder, the second binder is or includes a carboxyalkyl cellulose-based compound or a salt thereof, the crosslinking agent contains citric acid, and the citric acid is included in a range of ≥ 5 parts by weight to ≤ 50 parts by weight with respect to 100 parts by weight of the total of the first and second binders. The second filler has a higher aspect ratio than the first filler, and the weight ratio (the second filler : the first filler) of the second filler to the first filler is in a range of about 1:1 to about 1:10.

Due to a high tensile strength, the crosslinked product of the composition in which citric acid is included as a crosslinking agent to the mixture including the first and second binders has high tensile strength, which can inhibit battery ignition and explosion due to external impact, thereby enhancing the reliability and safety of the battery. The coating layer which includes the first and second fillers with different aspect ratios as well as the crosslinked product can facilitate the reduction in heat shrinkage rate of the separator and the improvement in battery cycle at high temperatures.

The citric acid is a polycarboxylic acid with hydroxy groups, as shown in the above chemical formula.

The citric acid may be crosslinked with the first binder, and the carboxyalkyl cellulose-based compound or a salt thereof. Since the citric acid has high dispersibility in the mixture of the first binder, and the carboxyalkyl cellulose-based compound or a salt thereof, the citric acid can be highly crosslinked to each of the first binder and the carboxyalkyl cellulose-based compound or a salt thereof, and thus can readily increase the tensile strength of the crosslinked product. Increasing the tensile strength of the crosslinked product can make it possible to inhibit the ignition and explosion of the battery due to external impact.

The coating layer includes the crosslinked product, and the mixture of first and second fillers as a filler. In the present disclosure, the mixture of the first and second fillers with different aspect ratios is included, and the weight ratio between the first and second fillers is adjusted.

First, the aspect ratio is described below.

The aspect ratio may refer to a ratio of the length or thickness of a filler to the diameter of the cross-section of the filler. Here, "diameter" may refer to the maximum length that can be obtained from the cross-section of the filler.

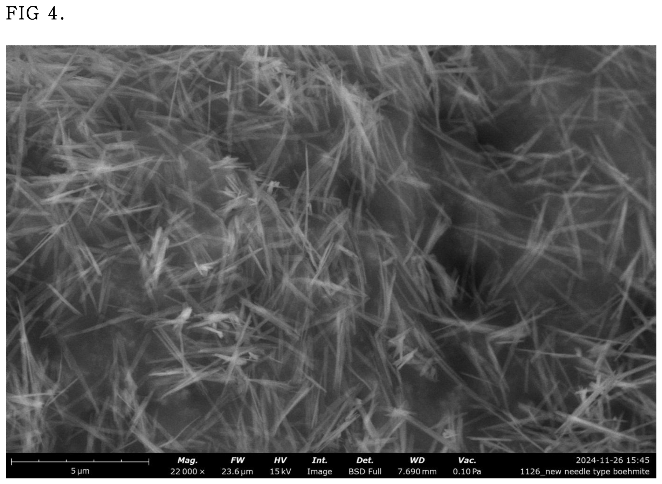

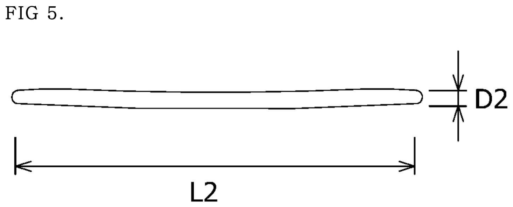

In the present disclosure, a second filler is used as a filler with a greater aspect ratio. FIG. 4 is an SEM image of the second filler according to one example embodiment, and FIG. 5 illustrates the aspect ratio of the second filler.

Referring to FIG. 5, the second filler may have a length that is significantly longer than the diameter of its cross-section. The second filler may be a needle-shaped filler, or a rod-shaped filler, and for example, a needle-shaped filler. FIG. 4 shows an SEM image of the needle-shaped filler.

Referring to FIG. 5, the aspect ratio of the second filler may refer to the ratio of a filler length (L2) to the maximum diameter (D2) of the cross-section. Here, the needle-shaped filler has a relatively smaller aspect ratio than a fiber-shaped filler, and the needle-shaped filler is defined to have an aspect ratio of 100 or less, the fiber-shaped filler is defined to have an aspect ratio of more than 100.

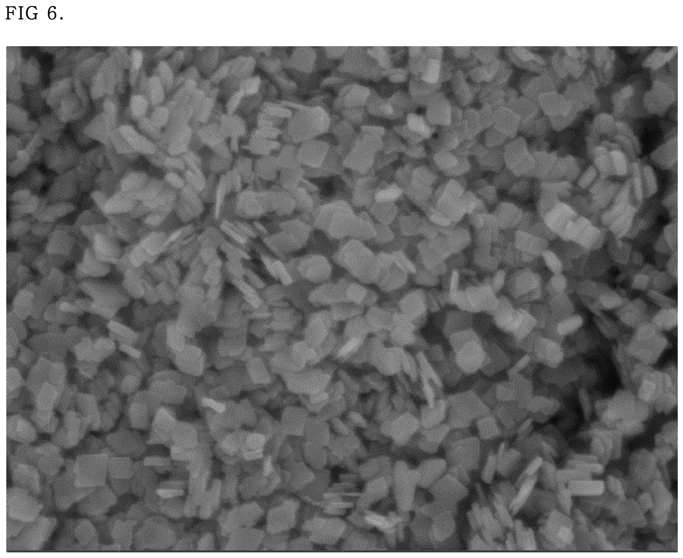

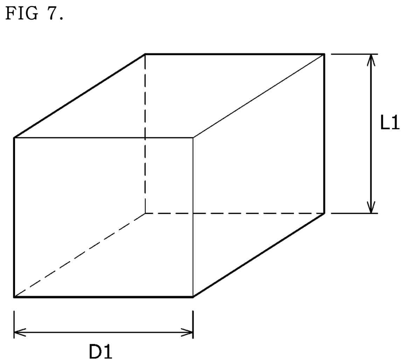

In the present disclosure, the first filler is used as a filler with a small aspect ratio. FIG. 6 is an SEM image of the first filler according to one example embodiment, and FIG. 7 illustrates the aspect ratio of the first filler.

Referring to FIG. 7, the first filler may be a filler in which there is no substantial difference between its length and its thickness. The first filler may be one or more of a cubic filler, a plate-shaped filler, a spherical filler, and an amorphous filler, and for example, a cubic filler or a plate-shaped filler. FIG. 6 is an SEM image of the cubic filler. Referring to FIG. 7, the aspect ratio of the first filler may refer to the ratio of the thickness (D1) of the first filler to the maximum length (L1) of the cross-section of the first filler.

In the present disclosure, in the coating layer including the crosslinked product, to increase the degree of adhesion to an electrode plate including a positive electrode or a negative electrode by increasing the density in the coating layer by filling the space between fillers without an increase in air permeability, and lowering the surface roughness through eliminating irregularities on the surface of the coating layer, first and second fillers with different aspect ratios were introduced. Accordingly, the separator remains firmly bound to the electrode plate even at high temperatures, which can facilitate improvement of the high-temperature lifespan of the battery.

In one example embodiment, the separator may have a surface roughness (Ra) of about 0.5 µm or less. Within the above range, the high-temperature lifespan of the battery may be improved.

The second filler has a higher aspect ratio than the first filler, and the second filler and the first filler are included in a weight ratio (the second filler : the first filler) in a range of about 1:1 to about 1:10.

When the weight ratio is lower than 1:1, as the first filler is included at a relatively small amount in the coating layer, both a dry heat shrinkage rate and a heat shrinkage rate in an electrolyte increase, and as the second filler is included at a relatively large amount, the surface of the coating layer has substantial or excessive irregularities, and the high-temperature lifespan of the battery may be reduced.

When the weight ratio is higher than about 1:10, the second filler may be included at a relatively small amount in the coating layer, thereby lowering the density of the coating layer, consequently reducing heat resistance of the separator, and shortening the high-temperature lifespan of the battery.

For example, the weight ratio may be 1:1, 1.5:1, 2:1, 2.5:1, 3:1, 3.5:1, 4:1, 4.5:1, 5:1, 5.5:1, 6:1, 6.5:1, 7:1, 7.5:1, 8:1, 8.5:1, 9:1, 9.5:1, 10:1, 1:1 to 1:9, or 1:4 to 1:9.

The citric acid may be included in a range of ≥ 5 parts by weight to ≤ 50 parts by weight with respect to 100 parts by weight of the total of the mixture of the first binder and the second binder.

When the content of the citric acid is less than about 5 parts by weight with respect to a total of 100 parts by weight, the increase in the modulus of the coating layer is insignificant, and the citric acid can be disadvantageous for inhibiting battery ignition and explosion due to external impact. When the content of the citric acid is more than about 50 parts by weight with respect to a total of 100 parts by weight, the adhesion of the separator to the substrate is lowered, thereby separating the coating layer from the porous substrate of the separator and thus degrading reliability. In one example embodiment, the citric acid may be included at 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 parts by weight, 10 to 50 parts by weight, or 10 to 20 parts by weight with respect to a total of 100 parts by weight. Within the above range, the significant effects of the separator described above may be exhibited.

In one example embodiment, the separator may have a heat shrinkage rate in each of the MD and TD of about 5% or less, measured after being left for 1 hour at 150 °C.

In one example embodiment, the separator may have a heat shrinkage rate in each of MD and TD of about 5% or less, measured after being left in an electrolyte for 1 hour at 150 °C.

In one example embodiment, the total of the first binder and the second binder may be about 95 wt% or more, for example, in a range of ≥ 95 wt% to ≤ 100 wt%, 99 to 100 wt%, or 100 wt% of the mixture. Within the above range, the above-described effects of the separator can be readily achieved.

In one example embodiment, the citric acid may be included at about 95 wt% or more, for example, in a range of ≥ 95 wt% to ≤ 100 wt%, 99 to 100 wt%, or 100 wt% of the crosslinking agent. Within the above range, the above-described effects of the separator can be readily achieved.

In one example embodiment, the crosslinked product may be or include a thermally crosslinked product.

In one example embodiment, the coating layer may include the first binder; the second binder, that is, a carboxyalkyl cellulose-based compound or a salt thereof; the crosslinking agent, that is, citric acid; and a first filler and a second filler. The coating layer may be formed of or include a composition for a coating layer to have a weight ratio of the second filler to the first filler in a range of about 1:1 to about 1:10.

Hereinafter, each component of the composition for a coating layer is described in detail.

### First binder

The first binder is substantially the same as the first binder described in "Separator for rechargeable battery according to first example embodiment." Therefore, the detailed description of the first binder is omitted.

### Second binder

The second binder is substantially the same as the second binder described in "Separator for rechargeable battery according to first example embodiment." Therefore, the detailed description of the second binder is omitted.

### Citric acid

The citric acid is substantially the same as the citric acid described in "Separator for rechargeable battery according to first example embodiment." Therefore, the detailed description of the citric acid is omitted.

### First filler

The first filler may be spherical, plate-shaped, cubic, or amorphous. For example, the first filler may be cubic or plate-shaped, and for example may be cubic.

The first filler may have a particle size (D100) of about 0.7 µm or less. Within the above range, the separator can readily achieve the dry shrinkage rate, and the shrinkage rate in an electrolyte. For example, the first filler may have a particle size (D100) of 0.05, 0.1, 0.15, 0.2, 0.25, 0.3, 0.35, 0.4, 0.45, 0.5, 0.55, 0.6, 0.65, or 0.7 µm, 0.55 µm or less, or in a range of ≥ 0.3 µm to ≤ 0.5 µm.

According to one example embodiment, the first filler may have a particle size (D50) of about 0.4 µm or less, for example, 0.05, 0.1, 0.15, 0.2, 0.25, 0.3, 0.35, or 0.4 µm, 0.3 µm or less, for example, in a range of ≥ 0.1 µm to ≤ 0.3 µm. Within the above range, the separator can exhibit a heat resistance improvement effect.

According to one example embodiment, the first filler may have an aspect ratio of less than about 100.

The first filler may be or include, for example, an inorganic filler, an organic filler, an inorganic/organic composite filler, or a combination thereof. The inorganic filler may be or include a ceramic material that can improve heat resistance. The inorganic filler may include, for example, at least one of a metal oxide, a quasi-metal oxide, a metal fluoride, a metal hydroxide, or a combination thereof. The inorganic filler may include, for example, at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but the present disclosure is not limited thereto. The organic filler may include at least one of an acrylic compound, an imide compound, an amide compound, or a combination thereof, but the present disclosure is not limited thereto. The organic filler may have a core-shell structure, but the present disclosure is not limited thereto. Preferably, the first filler may be or include at least one or more of boehmite, Mg(OH)₂, Al₂O₃, and BaTiO₃.

For the first filler, the mixture of the first binder and the second binder and the mixture of the first filler and the second filler may be included in a mass ratio (the mixture of the first binder and the second binder : the mixture of the first filler and the second filler) in a range of about 1:10 to about 1:50, for example, 1:10, 1:15, 1:20, 1:25, 1:30, 1:35, 1:40, 1:45, 1:50, 1:10 to 1:30, or 1:20 to 1:30 with respect to the mixture of the first binder and the second binder. Within the above range, the adhesion of the separator can increase.

The first filler may be in a range of ≥ 50 wt% to ≤ 99 wt%, for example, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, or 99 wt%,70 to 99 wt%, 75 to 99 wt%, for example, 80 to 99 wt%, 85 to 99 wt%, 90 to 99 wt%, or 95 to 99 wt% with respect to the total amount of the coating layer. Within the above range, the separator can exhibit desired or improved heat resistance, durability, oxidation resistance, and stability.

### Second filler

The second filler may have a greater aspect ratio than the first filler. For example, the second filler may have an aspect ratio of about 100 or less, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 100, or 5 to 100. Within the above range, it may be possible to reduce the surface roughness of the coating layer.

In one example embodiment, the second filler may have an average diameter in a range of ≥ 5 nm to ≤ 100 nm, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 100 nm, 30 to 50 nm, and an average length of 0.5 to 10 µm, for example, 0.5, 1, 1.5, 2, 2.5, 3, 3.5, 4, 4.5, 5, 5.5, 6, 6.5, 7, 7.5, 8, 8.5, 9, 9.5, or 10 µm, or 3 to 6 µm. Within the above range, the above-described aspect ratio can be achieved, and the increase in air permeability of the separator can be reduced or prevented.

The second filler may be or include a needle-shaped or rod-shaped filler, and for example, a needle-shaped filler.

The second filler may be or include, for example, an inorganic filler, an organic filler, an inorganic/organic composite filler, or a combination thereof. The inorganic filler may be or include a ceramic material that can improve heat resistance. The inorganic filler may include, for example, at least one of a metal oxide, a quasi-metal oxide, a metal fluoride, a metal hydroxide, or a combination thereof. The inorganic filler may include, for example, at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but the present disclosure is not limited thereto. The organic filler may include at least one of an acrylic compound, an imide compound, an amide compound, or a combination thereof, but the present disclosure is not limited thereto. The organic filler may have a core-shell structure, but the present disclosure is not limited thereto. For example, the second filler may be or include one or more of boehmite, Mg(OH)₂, Al₂O₃, and BaTiO₃.

In one example embodiment, the first filler may be or include boehmite, and the second filler may also be or include boehmite. Since boehmite has a hydroxide group on its surface without additional surface treatment, bonding between the first filler and the second filler can be increased.

The second filler may be or include a filler whose surface is not modified, or a surface-modified filler. The surface-modified second filler may further increase adhesion to the first filler. In one example embodiment, the surface modification may include introducing a hydrophilic group such as or including at least one of a hydroxide group, a carboxylic acid group, an amine group, or an amide group, or a combination thereof to the surface of the second filler. The surface modification may be performed by surface treatment using a compound with the above-mentioned functional group, for example, a silane compound with a hydroxide group, a carboxylic acid group, an amine group, or an amide group.

The second filler may be included in a range of ≥ 1 wt% to ≤ 10 wt%, for example, 1, 2, 3, 4, 5, 6, 7, 8, 9, 10 wt%, 1 to 5 wt%, or 1 to 3 wt% of the total amount of the coating layer. Within the above range, the separator can exhibit desired or improved heat resistance, durability, oxidation resistance, and stability.

The coating layer may have a thickness in a range of ≥ 0.01 µm to ≤ 20 µm, and within the above range, the coating layer can have a thickness of 1 to 10 µm, 1 to 5 µm, or 1 to 3 µm.

The ratio of the thickness of the coating layer to the thickness of the porous substrate may be in a range of ≥ 0.05 to ≤ 0.5, for example, 0.05 to 0.4, 0.05 to 0.3, or 0.1 to 0.2. Within the above range, the separator can exhibit desired or improved air permeability, heat resistance, and adhesion. Here, "thickness of the coating layer" means the thickness of one coating layer when the coating layer is formed on only one surface of the porous substrate, and means the thickness of the two coating layers when the coating layer is formed on both surfaces of the porous substrate.

The coating layer may be formed by coating the porous substrate with the composition for a coating layer to a desired or predetermined thickness, and then aging the coated substrate for about 15 hours or more, for example, in a range of ≥ 15 about to ≤ 24 hours at 85 to 120 °C.

### Porous substrate

The porous substrate is substantially the same as the porous substrate described in "Separator for rechargeable battery according to first example embodiment." Therefore, the detailed description of the porous substrate is omitted.

The separator for rechargeable lithium battery according to one example embodiment may exhibit desired or improved air permeability, which is, for example, less than about 200 sec/100 cc, for example, 190 sec/100 cc or less, or 180 sec/100 cc or less.

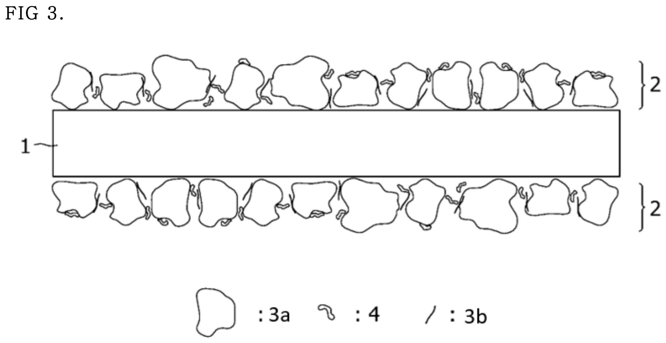

FIG. 3 is a cross-sectional view of a separator for a rechargeable lithium battery according to one example embodiment.

Referring to FIG. 3, the separator for a rechargeable lithium battery includes a porous substrate 1; and a coating layer 2 located on both surfaces of the porous substrate 1. The coating layer 2 includes a first filler 3a; a crosslinked product 4 of a first binder, a second binder, and citric acid; and a second filler 3b.

The coating layer of the separator may further include polymer particles having a melting point in a range of ≥ 80 °C to ≤ 135 °C. Hereinafter, the coating layer is described.

### Separator for rechargeable battery according to fourth example embodiment

The separator may improve a shutdown temperature and a breakdown voltage. The separator may provide a low heat shrinkage rate.

Since the separator improves a shutdown temperature and a breakdown voltage, a battery with enhanced safety can be provided. Since the separator for a rechargeable battery according to one example embodiment has a low heat shrinkage rate, the separator can provide a battery with desired or improved reliability and lifespan.

The separator includes a porous substrate, and a coating layer located on at least one surface of the porous substrate, wherein the coating layer includes a crosslinked product of the mixture including a first binder and a second binder, and a crosslinking agent; a filler; and polymer particles having a melting point in a range of ≥ 80 °C to ≤ 135 °C. The first binder is an aqueous binder, the second binder is a carboxyalkyl cellulose-based compound or a salt thereof, and the crosslinking agent contains citric acid, wherein the citric acid is included in a range of ≥ 5 parts by weight to ≤ 50 parts by weight with respect to 100 parts by weight of the total of the first and second binders. By significantly lowering a shutdown temperature and significantly increasing a breakdown voltage, the separator may significantly increase the safety of the battery when the polymer particles with the same average particle size are included.

Conventionally, polymer particles having a melting point in a range of ≥ 80 °C to ≤ 135 °C are known to lower a shutdown temperature and improve a breakdown voltage. The polymer particles having a melting point of 80 to 135 °C are aqueous particles, which may be dispersed in an aqueous solvent and then used to form the coating layer. However, the citric acid is readily dissolved in an aqueous solvent, and has a specific chemical formula to be described below. It can be considered that, due to the interaction between the citric acid and the polymer particles having a melting point of 80 to 135 °C, the polymer particles are stably fixed within the coating layer, thereby significantly improving a shutdown temperature and a breakdown voltage, but the present disclosure is not limited thereto.

The separator including the coating layer may also have a low heat shrinkage rate. In the present disclosure, citric acid is used as a crosslinking agent that crosslinks a binder. As the citric acid is included in the coating layer including the polymer particles having a melting point of 80 to 135 °C, the heat shrinkage rate of the separator can be significantly lowered.

In one example embodiment, the separator may provide a low dry heat shrinkage rate. In one example embodiment, the separator may have a dry shrinkage rate in each of MD and TD of about 5% or less, measured after being left for 1 hour at 150 °C.

In another example embodiment, the separator may provide a low heat shrinkage rate in an electrolyte. In one example embodiment, the separator may have a shrinkage rate in an electrolyte in each of MD and TD of about 10% or less, for example, 5% or less, measured after being left for 1 hour at 150 °C.

The polymer particles having a melting point in a range of ≥ 80 °C to ≤ 135 °C may be included in a range of ≥ 5 wt% to ≤ 30 wt%, for example, 5, 6, 7, 8, 9, 10, 11, 12, 13, 14, 15, 16, 17, 18, 19, 20, 21, 22, 23, 24, 25, 26, 27, 28, 29, or 30 wt%, 7 to 25 wt%, 10 to 25 wt%, or 15 to 25 wt% of the coating layer. Within the above range, an effect of improving both a breakdown voltage and a heat shrinkage rate can be achieved.

In one example embodiment, the polymer particles may be included in a range of ≥ 5 wt% to ≤ 30 wt%, for example, 5, 6, 7, 8, 9, 10, 11, 12, 13, 14, 15, 16, 17, 18, 19, 20, 21, 22, 23, 24, 25, 26, 27, 28, 29, or 30 wt%, 7 to 25 wt%, 10 to 25 wt%, or 15 to 25 wt% of the total of a first coating layer and a second coating layer. In another example embodiment, the polymer particles may be included in a range of ≥ 5 wt% to ≤ 30 wt%, for example, 5, 6, 7, 8, 9, 10, 11, 12, 13, 14, 15, 16, 17, 18, 19, 20, 21, 22, 23, 24, 25, 26, 27, 28, 29, or 30 wt%, 7 to 25 wt%, 10 to 25 wt%, or 15 to 25 wt% of the total of a first coating layer, an adhesive layer, and a second coating layer. In still another example embodiment, the polymer particles may be included in a range of ≥ 5 wt% to ≤ 30 wt%, for example, 5, 6, 7, 8, 9, 10, 11, 12, 13, 14, 15, 16, 17, 18, 19, 20, 21, 22, 23, 24, 25, 26, 27, 28, 29, or 30 wt%, 7 to 25 wt%, 10 to 25 wt%, or 15 to 25 wt% of the total of a third coating layer and a second coating layer. In yet another example embodiment, the polymer particles may be included in a range of ≥ 5 wt% to ≤ 30 wt%, for example, 5, 6, 7, 8, 9, 10, 11, 12, 13, 14, 15, 16, 17, 18, 19, 20, 21, 22, 23, 24, 25, 26, 27, 28, 29, or 30 wt%, 7 to 25 wt%, 10 to 25 wt%, or 15 to 25 wt% of a fourth coating layer. Within the above range, an effect of improving both a breakdown voltage and a heat shrinkage rate can be achieved.

Each of the first coating layer, the second coating layer, the adhesive layer, the third coating layer, and the fourth coating layer is described in detail below.

The citric acid is included in a range of ≥ 5 parts by weight to ≤ 50 parts by weight with respect to 100 parts by weight of the total of the first binder and the second binder. When the citric acid is included at less than about 5 parts by weight with respect to 100 parts by weight of the total of the binder, there may be a challenge of a decrease in the heat shrinkage rate in an electrolyte. When the citric acid is included at more than about 50 parts by weight with respect to 100 parts by weight of the total of the binder, there may be a challenge that the reduced binding force of the separator to the porous substrate causes separation between the coating layer and the porous substrate of the separator, thereby lowering the reliability.

For example, the citric acid may be included in a range of ≥ 5 parts by weight to ≤ 30 parts by weight, or 10 to 20 parts by weight with respect to 100 parts by weight of the total of the binder. Within the above range, the effect of the separator is significant, and the reliability of the battery can be increased by inhibiting the ignition and explosion of the battery due to external impact.

Here, the external impact may be measured by the following method:
A cylindrical cell having the separator and a state of charge (SOC) of 50% was evaluated using the international standard UN internal short circuit test method (referred to as the UN impact test). In this method, the cell was placed on a test block (SS41 steel, plane, thickness: 70 mm), and a cylindrical weight of 9.1±0.1 kg with a diameter of 15.8±0.1 mm was freely dropped onto the cell from a height of 630±25 mm to check for battery explosion or ignition. The number of samples of a total of the evaluated samples (10 samples) that passed the impact test (i.e., exhibited no cell explosion, rupture, or ignition) is presented. A result was evaluated as OK if (when) the number of failures (samples that did not pass) was 2 or less, and as NG (not good/fail) if (when) the number of failures was 3 or more.

In one example embodiment, the total of the first binder and the second binder may be included at about 95 wt% or more, for example, in a range of ≥ 95 wt% to ≤ 100 wt%, or 99 to 100 wt%, or 100 wt% of the mixture. Within the above range, the above-described effects of the separator can be readily achieved.

In one example embodiment, the citric acid may be included at about 95 wt% or more, for example, in a range of ≥ 95 wt% to ≤ 100 wt%, 99 to 100 wt%, or 100 wt% of the crosslinking agent. Within the above range, the above-described effects of the separator can be readily achieved.

In one example embodiment, the crosslinked product may be or include a thermally crosslinked product.

Hereinafter, each component of the coating layer is described in detail.

### First binder

The first binder is substantially the same as the first binder described in "Separator for rechargeable battery according to first example embodiment." Therefore, the detailed description of the first binder is omitted.

### Second binder

The second binder is substantially the same as the second binder described in "Separator for rechargeable battery according to first example embodiment." Therefore, the detailed description of the second binder is omitted.

### Citric acid

The citric acid is substantially the same as the citric acid described in "Separator for rechargeable battery according to first example embodiment." Therefore, the detailed description on the citric acid is omitted.

### Filler

The filler is substantially the same as the filler described in "Separator for rechargeable battery according to first example embodiment." Therefore, the detailed description on the filler is omitted.

### Polymer particles having melting point in a range of ≥ 80 °C to ≤ 135 °C

The polymer particles having a melting point in a range of ≥ 80 °C to ≤ 135 °C can reduce a temperature at which cell shutdown begins upon cell explosion of a conventional battery, thereby inhibiting the heat generation of the battery at an early stage.

In one example embodiment, the melting point of the polymer particles may be lower than the melting point of the porous substrate. In this case, the polymer particles melt before the substrate, forming a film on the separator to lead primary shutdown, and subsequently, shutdown occurs in the substrate, which can further enhance the puncture safety of the battery. For example, the melting point of the polymer particles may be in a range of ≥ 90 °C to ≤ 120 °C.

The polymer particles may have an average particle size (D50) in a range of ≥ 0.1 µm to 2 µm, for example, 0.1 to 1 µm. Within the above range, securing the battery performance can be facilitated by reducing or minimizing resistance during lithium-ion migration, and the shutdown function can be further enhanced.

The polymer particles may include one or more of a polyolefin, a polyolefin derivative, and a polyolefin wax. For example, the polyolefin may include one or more of low-density polyethylene, ultra-low-density polyethylene, and high-density polyethylene.

The polymer particles may have a weight average molecular weight in a range of ≥ 300 g/mol to ≤ 30,000 g/mol, for example, 2,000 to 10,000 g/mol. Within the above range, securing the battery performance can be facilitated by reducing or minimizing resistance during lithium-ion migration, and the shutdown function can be further enhanced.

The polymer particles may be overall dispersed in the coating layer. Alternatively, the polymer particles may be included in a single outermost layer of the coating layer.

The polymer particles may be included at a desired content in the coating layer as described above.

The coating layer may be or include a stacked structure of a first coating layer and a second coating layer below.

The coating layer may be or include a stacked structure of a first coating layer, an adhesive layer, and a second coating layer below.

The coating layer may be or include a stacked structure of a third coating layer and a second coating layer below.

The coating layer may be or include a fourth coating layer below.

### Form of coating layer

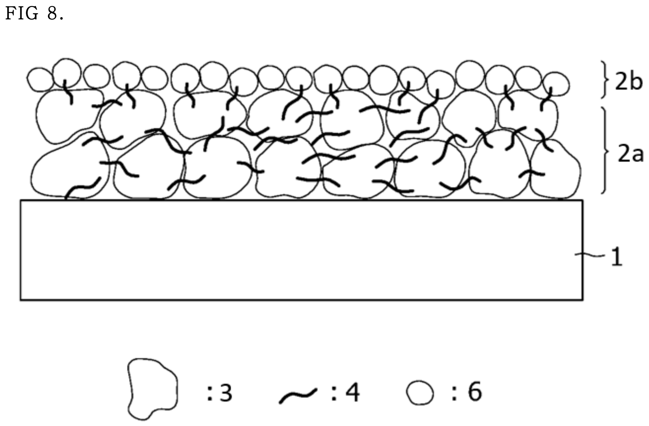

The form of a coating layer is described with reference to FIG. 8 to FIG. 11. FIG. 8 to FIG. 11 are each a cross-sectional view of a separator for a rechargeable battery according to one example embodiment.

FIG. 8 to FIG. 11 illustrate the case in which a coating layer is formed on only one surface of a porous substrate, but the coating layer may also be formed on both surfaces of the porous substrate.

Referring to FIG. 8, a separator for a rechargeable battery includes a porous substrate 1, and a first coating layer 2a and a second coating layer 2b, which are stacked, e.g., sequentially stacked, on one surface of the porous substrate 1. The first coating layer 2a may include a filler 3 and a crosslinked product 4, and the second coating layer 2b may include polymer particles 6 having a melting point in a range of ≥ 80 to ≤ 135 °C.

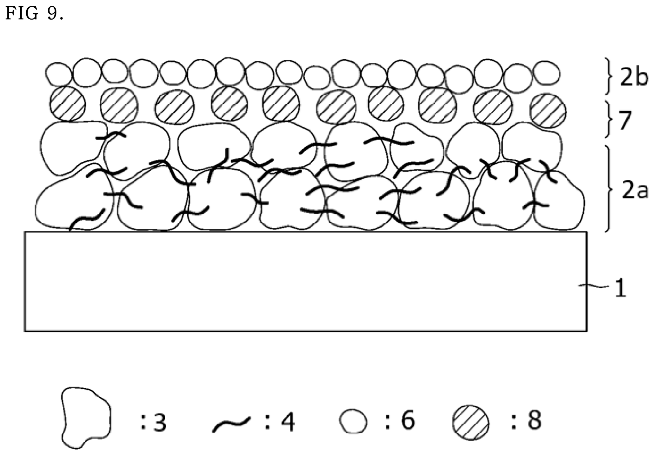

Referring to FIG. 9, a separator for a rechargeable battery includes a porous substrate 1, and a first coating layer 2a, an adhesive layer 7, and a second coating layer 2b, which are stacked, e.g., sequentially stacked, on one surface of the porous substrate 1. The first coating layer 2a may include a filler 3 and a crosslinked product 4, the second coating layer 2b may include polymer particles 6 having a melting point of 80 to 135 °C, and the adhesive layer 7 may include an adhesive binder 8. The adhesive binder may include a conventional adhesive binder known to those of ordinary skill in the art, for example, a (meth)acrylic binder.

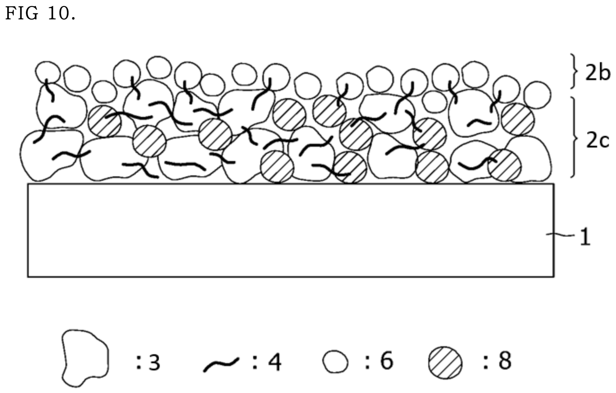

Referring to FIG. 10, a separator for a rechargeable battery includes a porous substrate 1, and a third coating layer 2c and a second coating layer 2b, which are stacked on one surface of the porous substrate 1. The third coating layer 2c includes a filler 3, a crosslinked product 4, and an adhesive binder 8, and the second coating layer 2b may include polymer particles 6 having a melting point in a range of ≥ 80 °C to ≤ 135 °C. The adhesive binder may include a conventional adhesive binder known to those of ordinary skill in the art, for example, a (meth)acrylic binder.

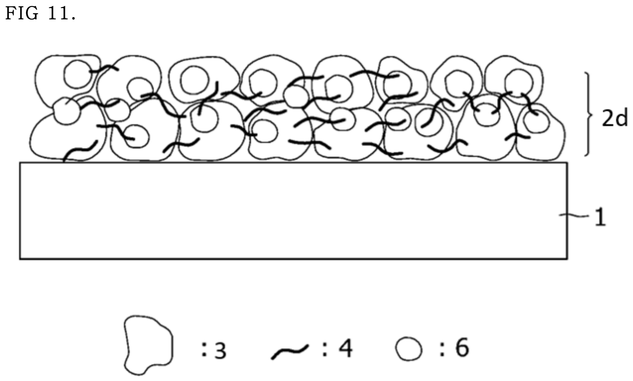

Referring to FIG. 11, a separator for a rechargeable battery includes a porous substrate 1, and a fourth coating layer 2d stacked on one surface of the porous substrate 1. The fourth coating layer 2d may include a filler 3, a crosslinked product 4, and polymer particles 6 having a melting point in a range of ≥ 80 °C to ≤ 135 °C.

The coating layer may have a thickness in a range of ≥ 0.01 µm to ≤ 20 µm, and within the above range, the coating layer may have a thickness of 1 to 10 µm, 1 to 5 µm, or 1 to 4 µm.

### Porous substrate

The porous substrate is substantially the same as the porous substrate described in "Separator for rechargeable battery according to first example embodiment." Therefore, the detailed description of the porous substrate is omitted.

The separator may exhibit desired or improved air permeability, which may be, for example, less than about 200 sec/100 cc, for example, 190 sec/100 cc or less, or 180 sec/100 cc or less. That is, the separator may have an air permeability of less than about 40 sec/100 cc·1 µm, for example, 30 sec/100 cc·1 µm or less, or 25 sec/100 cc·1 µm or less per unit thickness.

The separator may further include lithium cations. This is described in detail below.

### Separator for rechargeable battery according to fifth example embodiment

The separator may improve the high-temperature lifespan of the battery. The separator may replenish lithium ions that can be lost during repeated charging and discharging of a battery, thereby improving the battery lifespan at high temperatures.

When the battery is repeatedly charged and discharged, lithium cations in the battery are inevitably lost. For example, when the battery is repeatedly charged and discharged, the content of lithium cations in the battery may decrease due to electrode degradation and dendrite formation. The loss of these lithium cations may further increase when the battery operates at high temperatures.

The separator according to one example embodiment can enhance the battery lifespan at high temperatures by replenishing lithium ions that are lost during charging and discharging of the battery. In this regard, the separator may allow the coating layer to readily include lithium cations in a specific range by including the first and second binders as a source of the lithium cations. In addition, the separator may facilitate the elution of the lithium cations from a network structure formed by the crosslinking of the first binder and the second binder using citric acid, thereby increasing the elution rate of lithium cations from the first binder and the second binder. The lithium cations may be included in the first and second binders, but when a voltage is applied while the separator is immersed in the electrolyte, lithium ions can be released and supplied to the outside of the separator through the first and second binders.

According to one example embodiment, the separator may include a porous substrate and a coating layer located on at least one surface of the porous substrate, wherein the coating layer includes a crosslinked product of a mixture including a first binder and a second binder and a crosslinking agent; a filler; and lithium cations, the first binder is an aqueous binder, the second binder is a carboxyalkyl cellulose-based compound or a salt thereof, and the crosslinking agent contains citric acid. The citric acid is included in a range of ≥ 5 parts by weight to ≤ 50 parts by weight with respect to 100 parts by weight of the total of the first and second binders, and the content of the lithium cations in the coating layer is in a range of ≥ 50 ppm to ≤ 200 ppm.

The citric acid is a crosslinking agent that crosslinks the first binder and the second binder. The citric acid is a compound with a hydroxide group and three carboxylic acid groups as shown in the above chemical formula, and has high hydrophilicity. Therefore, the citric acid may have higher reactivity in an aqueous composition including a first binder, which is an aqueous binder.

The citric acid may be included in a range of ≥ 5 parts by weight to ≤ 50 parts by weight with respect to 100 parts by weight of the total of the first binder and the second binder. Within the above range, the separator may have desired or improved heat resistance and high-temperature lifespan. For example, the citric acid may be included at 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 parts by weight, or 5 to 40 parts by weight, 5 to 30 parts by weight, 5 to 25 parts by weight, or 5 to 20 parts by weight with respect to a total of 100 parts by weight. Within the above range, the above-described effect of the separator may be significant.

The separator includes the first binder and the second binder as sources of the lithium cations. That is, the first binder has the lithium cations, and the second binder has the lithium cations. The first and second binders used herein are types to be described below, and the optimal elution of lithium cations may be provided by crosslinking with the citric acid.

The content of the lithium cations in the coating layer is in a range of ≥ 50 ppm to ≤ 200 ppm. The lithium cations may be derived from the first and second binders of the coating layer.

When the content of the lithium cations is less than about 50 ppm, even when the first binder and the second binder are crosslinked by citric acid, the lithium cation content in the coating layer is significantly low, resulting in a low elution of lithium cations from the crosslinked product of the first and second binders, which may lead to a decrease in the capacity retention at high temperatures. When the content of the lithium cations is more than about 200 ppm, lithium cations are substantially or excessively included in the coating layer, resulting in the occurrence of defects in the battery. For example, the content of the lithium cations in the coating layer may be in a range of ≥ 70 ppm to ≤ 150 ppm. For example, the lithium cations in the coating layer may be contained at 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, 165, 166, 167, 168, 169, 170, 171, 172, 173, 174, 175, 176, 177, 178, 179, 180, 181, 182, 183, 184, 185, 186, 187, 188, 189, 190, 191, 192, 193, 194, 195, 196, 197, 198, 199, or 200 ppm.

The content of the lithium cations in the coating layer may be measured by a method to be described below, for example, an inductively coupled plasma optical emission spectrometer (ICP-OES) method.

In one example embodiment, the total of the first binder and the second binder may be about 95 wt% or more, for example, in a range of ≥ 95 wt% to ≤ 100 wt%, 99 to 100 wt%, or 100 wt%. Within the above range, the above-described effects of the separator can be readily achieved.

In one example embodiment, the citric acid may be included at about 95 wt% or more, for example, in a range of ≥ 95 wt% to ≤ 100 wt%, 99 to 100 wt%, or 100 wt% of the crosslinking agent. Within the above range, the above-described effects of the separator can be readily achieved.

In one example embodiment, the crosslinked product may be or include a thermally crosslinked product.

In one example embodiment, the coating layer may be formed of or include a composition for a coating layer, which includes the first binder, the second binder, the crosslinking agent, that is, citric acid, and a filler.

Hereinafter, each component of the composition for a coating layer is described in detail.

### First binder

The first binder may be substantially the same as the first binder described in "Separator for rechargeable battery according to first example embodiment." Therefore, only a first binder that has not been described in "Separator for rechargeable battery according to first example embodiment" is further described.

The first binder may include a unit with lithium cations as shown in Chemical Formula 2-1 below.

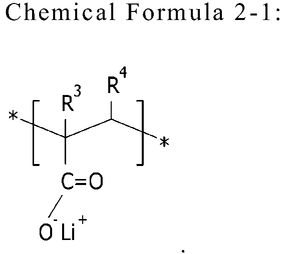

In Chemical Formula 2-1, R³ and R⁴ each independently is or includes the same as defined in Chemical Formula 2.

The first binder may include a structural unit containing a lithium salt of sulfonic acid.

The structural unit containing a lithium salt of sulfonic acid may be represented by Chemical Formula 9 below. 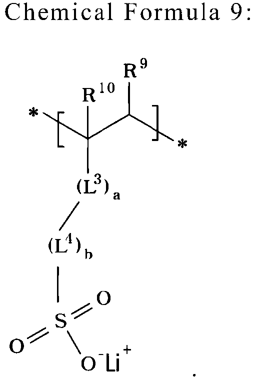 In Chemical Formula 9,
R⁹ and R¹⁰ each independently is or includes hydrogen or a C1 to C3 alkyl group,
L³ is or includes -C(=O)-, -C(=O)O-, -OC(=O)-, -O-, or -C(=O)NH-,
L⁴ is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, and
a and b are each independently an integer ranging from 0 to 2.

In one example embodiment, in Chemical Formula 9,
L³ may be or include -C(=O)NH-,
L⁴ may be or include a C1 to C10 alkylene group, and
a and b may be an integer equal to 1.

The structural unit containing a lithium salt of sulfonic acid may be or include, for example, a structural unit derived from a lithium salt of vinyl sulfonic acid, allyl sulfonic acid, styrene sulfonic acid, anethole sulfonic acid, (meth)acrylamidoalkane sulfonic acid, or sulfoalkyl (meth)acrylate. Here, the alkane may be a C1 to C20 alkane, a C1 to C10 alkane, or a C1 to C6 alkane, and the alkyl may be a C1 to C20 alkyl, a C1 to C10 alkyl, or a C1 to C6 alkyl. The salt may consist of the above-described sulfonic acid and suitable ions.

The (meth)acrylamidoalkane sulfonic acid may be or include, for example, 2-(meth)acrylamido-2-methylpropane sulfonic acid, and the sulfoalkyl (meth)acrylate may be or include, for example, 2-sulfoethyl (meth)acrylate, or 3-sulfopropyl (meth)acrylate.

The first binder may include one or more of a structural unit containing an alkali metal salt of the sulfonic acid, represented by Chemical Formula 5, a structural unit containing the sulfonic acid, represented by Chemical Formula 6, and a structural unit containing sulfonate, represented by Chemical Formula 7:
The (meth)acrylic binder may be prepared by polymerizing a monomer mixture providing the above-mentioned unit.

In one example embodiment, the (meth)acrylic binder may be prepared by polymerizing the mixture including a monomer providing Chemical Formula 5, a monomer providing Chemical Formula 6, and a monomer providing Chemical Formula 8.

In another example embodiment, the (meth)acrylic binder may be prepared by preparing a prepolymer by polymerizing a mixture including the monomer providing Chemical Formula 6, and the monomer providing Chemical Formula 5, and lithiating a part of M in Chemical Formula 6 of the prepolymer with lithium. The content of lithium cations in the coating layer may be adjusted by adjusting the lithiation rate. The lithiation of a part of M in Chemical Formula 6 may be performed by reacting the prepolymer with a lithium cation source, such as LiOH or Li₂CO₃. The lithiation rate may be determined by adjusting the content of the lithium cation source reacting with the prepolymer.

### Second binder

The second binder is an alkali metal salt of a carboxyalkyl cellulose-based compound, and at least any one of the alkali metals is lithium.

Upon the combination of the first binder described above and citric acid, the alkali metal salt of the carboxyalkyl cellulose-based compound may be crosslinked with the first binder by citric acid, which can improve the elution of lithium cations from the coating layer.

For example, the alkali metal salt of the carboxyalkyl cellulose-based compound may include a lithium salt of carboxymethyl cellulose of Chemical Formula 10 below:

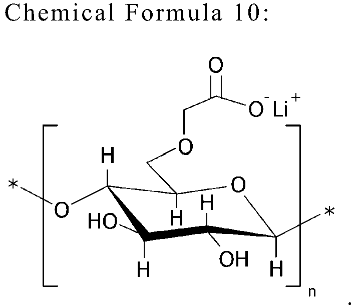

In Chemical Formula 10, n is the number of moles of a repeating unit.

The alkali metal salt of the carboxyalkyl cellulose-based compound may further include an alkali metal salt of carboxymethylcellulose of Chemical Formula 11 below:

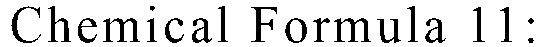

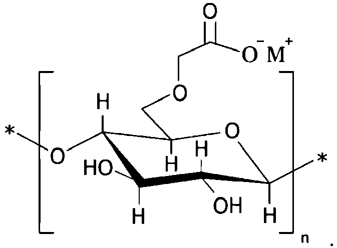

In Chemical Formula 11, M is sodium, potassium, rubidium, or cesium, and n is the number of moles of a repeating unit.

The alkali metal salt of the carboxyalkyl cellulose-based compound may be prepared by a method known to those of ordinary skill in the art.

For example, the alkali metal salt of the carboxyalkyl cellulose-based compound may be prepared by a method for lithiation of a part of M in the compound having the alkali metal salt of the carboxymethylcellulose of Chemical Formula 11 with lithium. The content of lithium cations in the coating layer may be adjusted by adjusting the lithiation rate. The lithiation of a part of M in Chemical Formula 11 may be performed by reacting the prepolymer with a lithium cation source, such as LiOH or Li₂CO₃. The lithiation rate may be determined by adjusting the content of the lithium cation source reacting with the prepolymer.

The alkali metal salt of the carboxyalkyl cellulose-based compound may have a weight average molecular weight in a range of ≥ 50,000 g/mol to ≤ 1,000,000 g/mol, for example, 100,000 to 600,000 g/mol. Within the above range, the viscosity of the composition for a coating layer is not substantially or excessively high, and therefore the dispersity of citric acid can be readily ensured.

### Citric acid

Citric acid may be included in a range of ≥ 5 parts by weight to ≤ 50 parts by weight, for example, 10 to 30 parts by weight with respect to 100 parts by weight of the first binder. Within the above range, heat resistance and the effect of adjusting a lithium cation elution rate can be exhibited.

Citric acid may be included in a range of ≥ 5 parts by weight to ≤ 50 parts by weight, for example, 10 to 30 parts by weight with respect to 100 parts by weight of the second binder. Within the above range, heat resistance and the effect of adjusting a lithium cation elution rate can be exhibited.

### Filler

The filler is substantially the same as the filler described in "Separator for rechargeable battery according to first example embodiment." Therefore, the detailed description of the filler is omitted.

### Porous substrate

The porous substrate is substantially the same as the porous substrate described in "Separator for rechargeable battery according to first example embodiment." Therefore, the detailed description of the porous substrate is omitted.

The separator for a rechargeable lithium battery according to one example embodiment may exhibit desired or improved air permeability, which may be or include, for example, less than about 200 sec/100 cc, for example, 190 sec/100 cc or less, or 180 sec/100 cc or less.

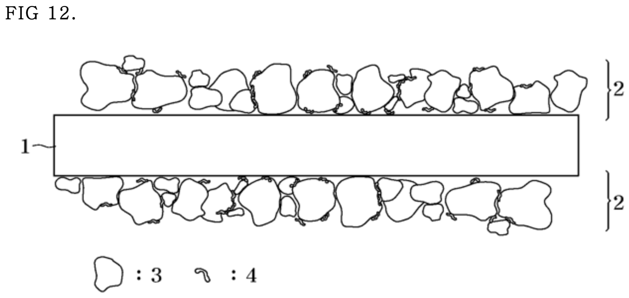

FIG. 12 is a cross-sectional view of the separator for a rechargeable lithium battery according to one example embodiment.

Referring to FIG. 12, the separator for a rechargeable lithium battery includes a porous substrate 1; and a coating layer 2 located on both surfaces of the porous substrate 1. The coating layer 2 includes a filler 3; and a crosslinked product 4 of a first binder, a second binder, and a crosslinking agent, and lithium cations which are not shown.

### Rechargeable lithium battery

Another example embodiment includes a rechargeable lithium battery including the separator for a rechargeable lithium battery according to one example embodiment; a positive electrode; and a negative electrode.

The separator for a rechargeable lithium battery refers to the content described above. The separator for a rechargeable lithium battery may be located between the positive electrode and the negative electrode.

### Positive electrode

A positive electrode for a rechargeable lithium battery may include a current collector and a positive electrode active material layer on the current collector. The positive electrode active material layer may include a positive electrode active material, and may further include a binder and/or a conductive material. For example, the positive electrode may further include an additive that can constitute a sacrificial positive electrode.

### Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001<b<0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, a high nickel-based positive electrode active material having a nickel content greater than or equal to about 80 mol%, greater than or equal to about 85 mol%, greater than or equal to about 90 mol%, greater than or equal to about 91 mol%, or greater than or equal to about 94 mol%, and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

An amount of the positive electrode active material may be in a range of ≥ 90 wt% to ≤ 99.5 wt% based on 100 wt% of the positive electrode active material layer. Amounts of the binder and the conductive material may be in a range of ≥ 0.5 wt% to ≤ 5 wt%, respectively, based on 100 wt% of the positive electrode active material layer.

The binder attaches the positive electrode active material particles to each other, and also attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinyl fluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause chemical change (e.g., that does not cause an undesirable chemical change in the rechargeable lithium battery) and that conducts electrons can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

Al may be used as the current collector, but is not limited thereto.

### Negative electrode

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include a range of ≥ 90 wt% to ≤ 99 wt% of the negative electrode active material, a range of ≥ 0.5 wt% to ≤ 5 wt% of the binder, and a range of ≥ 0 wt% to ≤ 5 wt% of the conductive material.

### Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

The binder may attach the negative electrode active material particles to each other, and also attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change(e.g., that does not cause an undesirable chemical change in the rechargeable lithium battery) and that conducts electrons, can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

### Electrolyte Solution

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone, or in combination of two or more solvents.

In addition, when using a carbonate-based solvent, a cyclic carbonate and a chain carbonate may be mixed together, and the cyclic carbonate and the chain carbonate may be mixed in a volume ratio in a range of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on their shape.

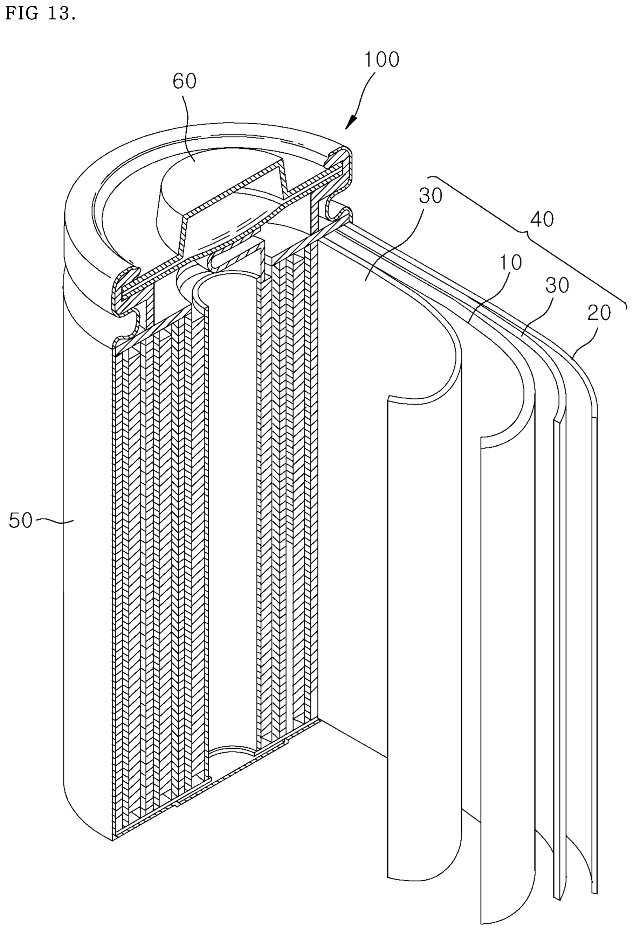

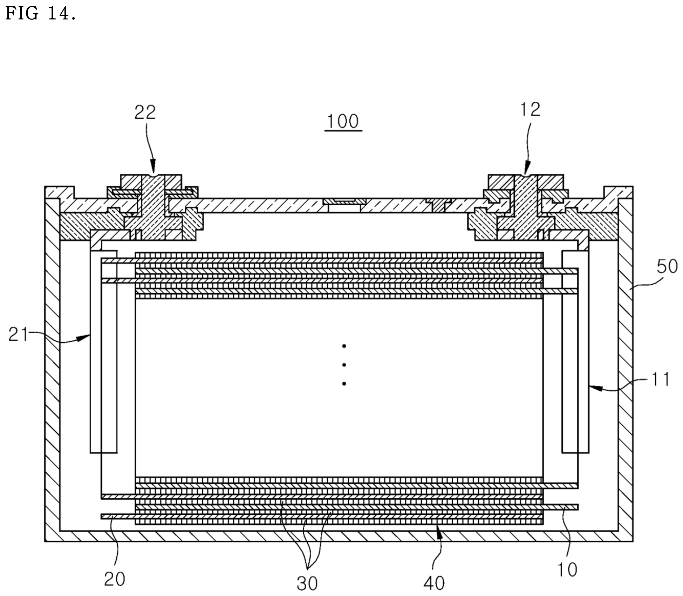

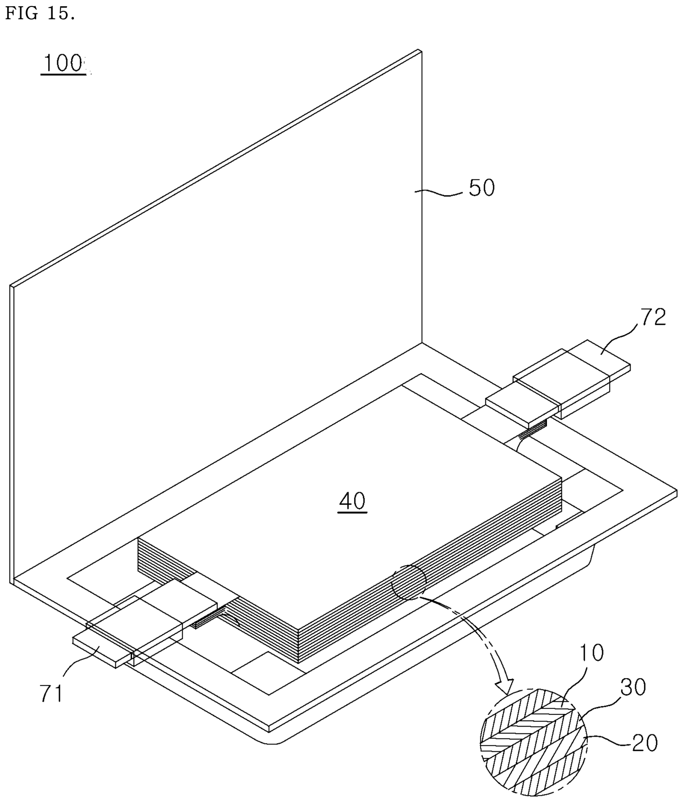

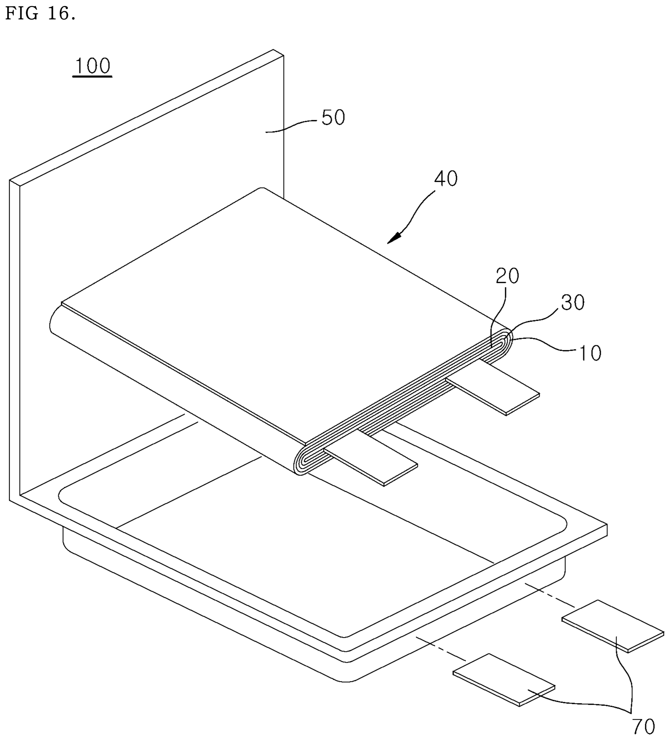

FIG. 13 to FIG. 16 are schematic views illustrating a rechargeable lithium battery according to an example embodiment. FIG. 13 shows a cylindrical battery, FIG. 14 shows a prismatic battery, and FIG. 15 and FIG. 16 show pouch-type batteries. Referring to FIG. 13 to FIG. 16, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 13. In FIG. 14, the rechargeable lithium battery 100 may include a positive lead tab 11, a positive terminal 12 connected to the positive lead tab 11, a negative lead tab 21, and a negative terminal 22 connected to the negative lead tab 21. As shown in FIG. 15 and FIG. 16, the rechargeable lithium battery 100 may include an electrode tab 70 illustrated in FIG. 16, or, for example, a positive electrode tab 71 and a negative electrode tab 72 illustrated in FIG. 15, the electrode tabs 70/71/72 forming an electric path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure is described. However, the following examples are merely examples of the present disclosure, and the present disclosure is not limited to the following examples.

### Preparation Example 1

In a 10 L four-neck flask equipped with a stirrer, a thermometer, and a condenser, after adding distilled water (6,361 g), acrylamide (9.5 mol), potassium persulfate (0.01 mol), 2-acrylamido-2-methylpropanesulfonic acid (0.5 mol), and a 5N lithium hydroxide aqueous solution (1.05 equiv with respect to the total amount of the 2-acrylamido-2-methylpropanesulfonic acid), the operation of reducing the inner pressure to 10 mmHg using a diaphragm pump and returning the pressure to normal pressure with nitrogen was repeated three times. The reaction was performed for 12 hours while controlling the temperature of the reaction solution to be stabilized in a range between 65 °C to 70 °C. After cooling to room temperature, the pH of the reaction solution was adjusted to a range of 7 to 8 using a 25% aqueous ammonia solution. By the above-described method, poly(acrylamido-co-2-acrylamido-2-methylpropanesulfonic acid)lithium salt was prepared. The molar ratio of acrylamide:2-acrylamido-2-methylpropanesulfonic acid was 95:5. About 10 mL of the reaction solution (reaction product) was taken and the content of a non-volatile component was measured, which was 9.5wt% (theoretical value: 10wt%).

### Preparation Example 2

In a 3 L four-neck flask equipped with a stirrer, a thermometer, and a condenser, after adding distilled water (968 g), acrylic acid (0.39 mol), ammonium persulfate (2.85 mmol), 2-acrylamido-2-methylpropanesulfonic acid (0.02 mol), and 20% lithium hydroxide aqueous solution (0.8 equiv with respect to the total amount of the acrylic acid and 2-acrylamido-2-methylpropanesulfonic acid), the operation of reducing the inner pressure to 10 mmHg using a diaphragm pump and returning the pressure to normal pressure with nitrogen was repeated three times, and acrylonitrile (0.59 mol) was added. The reaction was performed for 18 hours while controlling the temperature of the reaction solution to be stabilized between a range of 65 °C to 70 °C, ammonium persulfate (0.95 mmol) was secondarily added, the temperature was elevated to 80 °C, and then the reaction was performed again for 4 hours. After cooling to room temperature, the pH of the reaction solution was adjusted to a range of 7 to 8 using a 25% aqueous ammonia solution.

By the above-described method, poly(acrylic acid-co-lithium acrylate-co-acrylonitrile-co-lithium 2-acrylamido-2-methylpropane sulfonate was prepared as an acrylic binder. The molar ratio of acrylic acid and lithium acrylate, acrylonitrile, and lithium 2-acrylamido-2-methylpropane sulfonate was 39:59:2. About 10 mL of the reaction solution (reaction product) was taken and the content of a non-volatile component was measured, which was 9.0wt% (theoretical value: 10wt%).

### Example 1

A dispersion was prepared by mixing the acrylic binder prepared in Preparation Example 1 (10 wt% in distilled water) and boehmite (particle size (D100): 500 nm, particle size (D50): 200 nm, plane-shaped) as a filler, adding water as a solvent, milling the resulting mixture using a bead mill at 25 °C for 30 minutes, and then dispersing the milled result.

A composition for a coating layer was prepared by adding sodium carboxymethyl cellulose (CMC-Na, weight average molecular weight: 200,000 g/mol) and citric acid to the dispersion, and adding water such that a total solid content became 20 wt%.

The composition for a coating layer includes 50 parts by weight of an acrylic binder; 50 parts by weight of sodium carboxymethyl cellulose; and 10 parts by weight of citric acid with respect to 100 parts by weight of the total of the acrylic binder and the sodium carboxymethyl cellulose. The composition for a coating layer has a weight ratio of a total of the acrylic binder and the sodium carboxymethyl cellulose to the filler of 1:20.

A separator was prepared by coating both surfaces of a polyethylene-based film (thickness: 8 µm (SK), air permeability: 120 sec/100 cc, and puncture strength: 480 kgf) with the composition for a coating layer to a thickness of 2 µm through a die coating method, and drying and aging the resulting film in an oven at 85 °C for 16 hours.

### Examples 2 to 7

Separators were prepared in the same manner as in Example 1, except that the contents of an acrylic binder, sodium carboxymethyl cellulose, and citric acid used in Example 1 were changed as shown in Table 1 below.

### Example 8

A separator was prepared in the same manner as in Example 1, except that the binder of Preparation Example 2 was used instead of the binder of Preparation Example 1.

### Comparative Examples 1 to 5

Separators were prepared in the same manner as in Example 1, except that the contents of an acrylic binder, sodium carboxymethyl cellulose, and citric acid used in Example 1 were changed as shown in Table 1 below.

### Comparative Example 6

A separator was prepared in the same manner as in Example 1, except that adipic acid was used instead of citric acid used as a crosslinking agent in Example 1.

### Dry shrinkage rate (units: %)

Samples were prepared by cutting the separators of the examples and comparative examples into a size of 5 cm × 5 cm. After leaving each sample in an oven at 150 °C for 1 hour, shrinkage rates in a machine direction (MD) and a transverse direction (TD) were calculated. The shrinkage rates were calculated by Mathematical Formula 1 below. $Shrinkage rate = \left(L0-L1\right) / L 0 \times 100 .$

L0 is the initial length of the separator, and L1 is the length of the separator after leaving it at 150 °C for 1 hour.

### Shrinkage rate in electrolyte (units:%)

Samples were prepared by cutting the separators of the examples and comparative examples into a size of 3 cm × 8 cm. A positive electrode slurry was prepared by mixing 97 wt% of a lithium-cobalt-nickel-aluminum oxide as a positive electrode active material, 1.5 wt% of carbon nanotubes as a conductive material, and 1.5 wt% of polyvinylidene fluoride, and adding N-methyl-2-pyrrolidone. A positive electrode was prepared by coating an aluminum foil with the prepared positive electrode slurry, and then drying and rolling the resulting aluminum foil. A negative electrode slurry was prepared by mixing 97.4 wt% of graphite as a negative electrode active material, 1.0 wt% of carboxymethyl cellulose, 1.5 wt% of styrene-butadiene rubber, and 0.1 wt% of carbon nanotubes as a conductive material, and adding distilled water. A negative electrode was prepared by coating a copper foil with the prepared negative electrode slurry and drying and rolling the resulting copper foil.

One sheet of sample was placed between the positive electrode and the negative electrode to form three sets of stacked structures (the positive electrode-the sample-the negative electrode), and then the stacked structures were put into a pouch. 2.5 g of an electrolyte (1.5 M LiPF₆-dissolved ethylene carbonate, ethylmethyl carbonate, and dimethyl carbonate (volume ratio of 30:50:20)) was injected to completely immerse the stacked structure in an electrolyte, sealed and then left at 25 °C for 12 hours, followed by leaving it in an oven at 150 °C for 1 hour. Afterward, the sample was taken from the pouch, and then shrinkage rates in MD and TD were calculated. The shrinkage rates were able to be calculated by Mathematical Formula 1 above.

### Substrate adhesion: (Units: N)

The prepared separator was cut into a size of 3 cm (width) × 8 cm (length), and an adhesive tape (3M, width: 10 mm) was cut to a length of 150 mm and then adhered to the coating layer of the separator in the MD of the separator using a roller made of 3 kg of rubber without bubbles. After separating the adhesive tape approximately 50 mm apart from the separator, the separator was fixed to the upper grip and the tape was fixed to the lower grip. Here, the gap between the grips was 20 mm. After sample fixing, the tape was peeled in the 180° direction at a speed of 20 mm/min. An average value was obtained by measuring the force needed to peel 40 mm from the start of peeling three times.

### Cell characteristics:

A cylindrical cell having each of the separators of the examples and comparative examples and a state of charge (SCO) of 50% was evaluated using the international standard UN internal short circuit test method. In this method, the cell was placed on a test block (SS41 steel, plane, thickness: 70 mm), and a cylindrical weight of 9.1±0.1 kg with a diameter of 15.8±0.1 mm was freely dropped onto the cell from a height of 630±25 mm to check for battery explosion or ignition. The number of samples of a total of the evaluated samples (10 samples) that passed the impact test (i.e., exhibited no cell explosion, rupture, or ignition) is presented. A result was evaluated as OK if (when) the number of failures (samples that did not pass) was 2 or less, and as NG (not good/fail) when the number of failures was 3 or more.

**Table 1:**

| | First binder | Seco nd bind er | Wei ght ratio 1 | Crosslin king agent, parts by weight 2 | Wei ght ratio 3 | Dry shrinka ge rate | | Shrinka ge rate in electrol yte | | Substr ate adhesi on | Impact evaluation | |
|---|---|---|---|---|---|---|---|---|---|---|---|---|
| | | | | | | M D | T D | M D | TD | | Evalua tion | N o. |
| Example 1 | Prepara tion Exampl e 1 | CM C-Na | 50:5 0 | Citric acid, 10 | 1:20 | 4. 0 | 2. 0 | 3. 5 | 3.0 | 2.84 | OK | 1 |
| Example 2 | Prepara tion Exampl e 1 | CM C-Na | 50:5 0 | Citric acid, 20 | 1:20 | 2. 7 | 1. 2 | 3. 5 | 3.0 | 2.55 | OK | 1 |
| Example 3 | Prepara tion Exampl e 1 | CM C-Na | 50:5 0 | Citric acid, 5 | 1:20 | 5. 0 | 3. 0 | 7. 0 | 6.0 | 2.82 | OK | 2 |
| Example 4 | Prepara tion Exampl e 1 | CM C-Na | 50:5 0 | Citric acid, 50 | 1:20 | 2. 1 | 1. 5 | 3. 0 | 3.0 | 2.50 | OK | 0 |
| Example 5 | Prepara tion Exampl e 1 | CM C-Na | 60:4 0 | Citric acid, 10 | 1:20 | 3. 7 | 2. 0 | 3. 0 | 2.8 | 2.35 | OK | 1 |
| Example 6 | Prepara tion Exampl e 1 | CM C-Na | 80:2 0 | Citric acid, 10 | 1:20 | 2. 8 | 1. 7 | 2. 8 | 2.7 | 2.18 | OK | 1 |
| Example 7 | Prepara tion Exampl e 1 | CM C-Na | 30:7 0 | Citric acid, 10 | 1:20 | 5. 0 | 3. 8 | 5. 0 | 5.0 | 2.95 | OK | 2 |
| Example 8 | Prepara tion Exampl e 2 | CM C-Na | 50:5 0 | Citric acid, 10 | 1:20 | 5. 0 | 5. 0 | 7. 0 | 8.0 | 2.40 | OK | 2 |
| Compara tive Example 1 | Prepara tion Exampl e 1 | - | 100: 0 | Citric acid, 10 | 1:20 | 4. 0 | 2. 5 | 8 | 10 | 1.42 | NG | 7 |
| Compara tive Example 2 | - | CM C-Na | 0:10 0 | Citric acid, 10 | 1:20 | 21 | 1 5 | 34 | 21 | 2.94 | NG | 9 |
| Compara tive Example 3 | Prepara tion Exampl e 1 | CM C-Na | 50:5 0 | Citric acid, 0 | 1:20 | 7. 0 | 5. 5 | 29 | 36 | 2.48 | NG | 9 |
| Compara tive Example 4 | Prepara tion Exampl e 1 | CM C-Na | 50:5 0 | Citric acid, 2 | 1:20 | 7. 0 | 4. 5 | 8 | 11 | 2.42 | NG | 6 |
| Compara tive Example 5 | Prepara tion Exampl e 1 | CM C-Na | 50:5 0 | Citric acid, 55 | 1:20 | 5. 5 | 6. 5 | 16 | 15 | 1.95 | NG | 7 |
| Compara tive Example 6 | Prepara tion Exampl e 1 | CM C-Na | 50:5 0 | Adipic acid, 10 | 1:20 | 10 .0 | 8. 8 | 24 | 34 | 2.32 | NG | 9 |

| | | | | | | | | | | | | |
|---|---|---|---|---|---|---|---|---|---|---|---|---|
| *In Table 1 above, weight ratio 1: the weight ratio of the first binder to the second binder; parts by weight 2: the content of the crosslinking agent with respect to 100 parts by weight of the total of the first binder and the second binder; weight ratio 3: the weight ratio of a total of the first binder and the second binder to the filler. | | | | | | | | | | | | |

As shown in Table 1, the separators of the examples were able to inhibit battery ignition and explosion due to external impact, and provided a low heat shrinkage rate and high adhesion to a substrate. However, referring to Table 1, Comparative Examples 1 to 3 without any one of the first binder, the second binder, and the citric acid of the present disclosure exhibited an insignificant battery protective effect against external impact. In addition, Comparative Examples 4 and 5 outside the citric acid content range of the present disclosure, and Comparative Example 6 using adipic acid instead of citric acid showed a high shrinkage rate in the electrolyte and provided only an insignificant protective effect of the battery against external impact.

### Example 9

A dispersion was prepared by mixing the acrylic binder prepared in Preparation Example 1 (10 wt% in distilled water) and boehmite (particle size (D100): 500 nm, particle size (D50): 200 nm, plane-shaped) as a filler, adding water as a solvent, milling the resulting mixture using a bead mill at 25 °C for 30 minutes, and then dispersing the milled result.

CMC-Na (weight average molecular weight: 200,000 g/mol) and citric acid were added to the dispersion. Afterward, a composition for a coating layer was prepared by adding water and ethanol to have a total solid content of 20 wt%.

The composition for a coating layer includes 50 parts by weight of an acrylic binder; 50 parts by weight of CMC-Na; and 10 parts by weight of citric acid with respect to 100 parts by weight of the total of the acrylic binder and the CMC-Na. In the composition for a coating layer, the weight ratio of a total of the acrylic binder and the CMC-Na to the filler is 1:20. The composition for a coating layer includes 10 parts by weight of ethanol with respect to 100 parts by weight of the CMC-Na.

A separator was prepared by coating both surfaces of a polyethylene-based film (thickness: 8 µm (SK), air permeability: 120 sec/100 cc, and puncture strength: 480 kgf) with the composition for a coating layer to a thickness of 2 µm through a die coating method, and drying and aging the resulting film in an oven at 100 °C for 16 hours.

### Examples 10 to 15 and 17

Separators were prepared in the same manner as in Example 9, except that the contents of an acrylic binder, CMC-Na and citric acid, and the type and content of alcohol described in Example 9 were changed as shown in Table 2 above.

### Example 16

A separator was prepared in the same manner as in Example 9, except that the binder of Preparation Example 2 was used instead of the binder of Preparation Example 1 used in Example 9.

### Comparative Examples 7 to 11

Separators were prepared in the same manner as in Example 9, except that the contents of an acrylic binder, sodium carboxymethyl cellulose, and citric acid used in Example 9 were changed as shown in Table 2 below.

### Comparative Example 12

A separator was prepared in the same manner as in Example 9, except that adipic acid was used instead of citric acid as a crosslinking agent, used in Example 9.

### Dry shrinkage rate (units: %)

Dry shrinkage rates were measured in the same manner as the method of measuring a dry shrinkage rate described above.

### Shrinkage rate in electrolyte (units:%)

Shrinkage rates in an electrolyte were measured in the same manner as described in the method of measuring a shrinkage rate in an electrolyte above.

### Air permeability (units: sec/100 cc)

Air permeability was measured in the same manner as the air permeability measurement described above.

### Membrane resistance (units: Ω)

Membrane resistance was measured in the same manner as the membrane resistance measurement described above.

### Cell characteristics:

Cell characteristics were measured in the same manner as the cell characteristic measurement described above.

**Table 2:**

| | First binde r | Sec ond bin der | We igh t rati o 1 | Crossl inking agent | Alc ohol | We igh t rati o 2 | Dry shrink age rate | | Shrink age rate in electro lyte | | Air perme ability | Mem brane resist ance | Cell charact eristics |
|---|---|---|---|---|---|---|---|---|---|---|---|---|---|
| | | | | | | | M D | T D | M D | T D | | | |
| Examp le 9 | Prepa ration Exam ple 1 | CM C-Na | 50: 50 | Citric acid, 10 | Etha nol, 10 | 1:2 0 | 3. 0 | 1. 8 | 3. 5 | 3. 0 | 105 | 0.6 | OK |
| Examp le 10 | Prepa ration Exam ple 1 | CM C-Na | 50: 50 | Citric acid, 20 | Etha nol, 10 | 1:2 0 | 2. 5 | 1. 0 | 3. 3 | 2. 1 | 120 | 0.7 | OK |
| Examp le 11 | Prepa ration Exam ple 1 | CM C-Na | 50: 50 | Citric acid, 5 | Etha nol, 10 | 1:2 0 | 4. 5 | 2. 5 | 6. 0 | 5. 5 | 95 | 0.57 | OK |
| Examp le 12 | Prepa ration Exam ple 1 | CM C-Na | 50: 50 | Citric acid, 50 | Etha nol, 10 | 1:2 0 | 2. 4 | 1. 1 | 3. 0 | 1. 8 | 135 | 0.77 | OK |
| Examp le 13 | Prepa ration Exam ple 1 | CM C-Na | 60: 40 | Citric acid, 10 | Etha nol, 10 | 1:2 0 | 3. 0 | 2. 0 | 3. 5 | 3. 0 | 106 | 0.62 | OK |
| Examp le 14 | Prepa ration Exam ple 1 | CM C-Na | 80: 20 | Citric acid, 10 | Etha nol, 10 | 1:2 0 | 2 5 | 1 5 | 2. 8 | 2. 5 | 105 | 0.64 | OK |
| Examp le 15 | Prepa ration Exam ple 1 | CM C-Na | 30: 70 | Citric acid, 10 | Etha nol, 10 | 1:2 0 | 4 8 | 3 5 | 4. 0 | 4. 5 | 105 | 0.65 | OK |
| Examp le 16 | Prepa ration Exam ple 2 | CM C-Na | 50: 50 | Citric acid, 10 | Etha nol, 10 | 1:2 0 | 5 0 | 4 8 | 6. 5 | 7. 6 | 106 | 0.66 | OK |
| Examp le 17 | Prepa ration Exam ple 1 | CM C-Na | 50: 50 | Citric acid, 10 | Buta nol, 10 | 1:2 0 | 2. 5 | 1 | 2. 8 | 2 | 105 | 0.63 | OK |
| Compa rative Examp le 7 | Prepa ration Exam ple 1 | - | 100 :0 | Citric acid, 10 | Etha nol, 10 | 1:2 0 | 3 8 | 2 3 | 7. 0 | 8. 0 | 104 | 0.64 | NG |
| Compa rative Examp le 8 | - | CM C-Na | 0:1 00 | Citric acid, 10 | Etha nol, 10 | 1:2 0 | 2 0 | 1 8 | 3 1 | 2 5 | 101 | 0.65 | NG |
| Compa rative Examp le 9 | Prepa ration Exam ple 1 | CM C-Na | 50: 50 | Citric acid, 0 | Etha nol, 10 | 1:2 0 | 8 0 | 5 3 | 3 0 | 2 8 | 99 | 0.58 | NG |
| Compa rative Examp le 10 | Prepa ration Exam ple 1 | CM C-Na | 50: 50 | Citric acid, 2 | Etha nol, 10 | 1:2 0 | 8 0 | 5 0 | 2 8 | 2 7 | 100 | 0.59 | NG |
| Compa rative Examp le 11 | Prepa ration Exam ple 1 | CM C-Na | 50: 50 | Citric acid, 55 | Etha nol, 10 | 1:2 0 | 2. 5 | 1. 0 | 2. 8 | 2. 0 | 142 | 0.83 | OK |
| Compa rative Examp le 12 | Prepa ration Exam ple 1 | CM C-Na | 50: 50 | Adipic acid, 10 | Etha nol, 10 | 1:2 0 | 1 1 | 9 | 2 4 | 3 4 | 104 | 0.62 | NG |

| | | | | | | | | | | | | | |
|---|---|---|---|---|---|---|---|---|---|---|---|---|---|
| *In Table 2, weight ratio 1: the weight ratio of the first binder to the second binder; weight ratio 2: the weight ratio of a total of the first binder and the second binder to the filler. | | | | | | | | | | | | | |

As shown in Table 2 above, the separators of the examples were able to inhibit battery ignition and explosion due to external impact, thereby increasing battery reliability and stability. In addition, the separators of the examples provide a low heat shrinkage rate, low air permeability, and low resistance, thereby increasing the lifespan of the battery.

However, as shown in Table 2 above, the separators of the comparative examples could not obtain the above-described effects of the separators of the examples.

### Example 18

A dispersion was prepared by mixing the acrylic binder prepared in Preparation Example 1 (10 wt% in distilled water), boehmite (particle size (D100): 500 nm, particle size (D50): 200 nm, aspect ratio: less than 100, cubic) as a first filler, and boehmite (length: 5 µm, diameter: 50 nm, aspect ratio: 100, surface not modified, needle-shaped) as a second filler, adding water as a solvent, milling the resulting mixture using a bead mill at 25 °C for 30 minutes, and then dispersing the milled result.

A composition for a coating layer was prepared by adding CMC-Na (weight average molecular weight: 200,000 g/mol) and citric acid to the dispersion, and adding water to have a total solid content of 20 wt%.

The composition for a coating layer includes 50 parts by weight of an acrylic binder; 50 parts by weight of CMC-Na; and 10 parts by weight of citric acid with respect to 100 parts by weight of the total of the acrylic binder and the CMC-Na. In the composition for a coating layer, the weight ratio of the needle-shaped second filler to the cubic first filler is 1:1. In the composition for a coating layer, the weight ratio of the total of the acrylic binder and the CMC-Na to the mixture of the first and second fillers is 1:20.

A separator was prepared by coating both surfaces of a polyethylene-based film (thickness: 8 µm (SK), air permeability: 120 sec/100 cc, and puncture strength: 480 kgf) with the composition for a coating layer to a thickness of 2 µm through a die coating method, and drying and aging the resulting film in an oven at 100 °C for 16 hours.

### Examples 19 to 26

Separators were prepared in the same manner as in Example 18, except that the contents of an acrylic binder, CMC-Na, citric acid, and first and second fillers used in Example 18 were changed as shown in Table 3 below.

### Example 27

A separator was prepared in the same manner as in Example 18, except that the binder used in Preparation Example 2 was used instead of the binder of Preparation Example 1 used in Example 18.

### Comparative Examples 13 to 15

Separators were prepared in the same manner as in Example 18, except that the contents of an acrylic binder, CMC-Na, citric acid, and first and second fillers used in Example 18 were changed as shown in Table 3 below.

### Dry shrinkage rate (units: %)

Dry shrinkage rates were measured in the same manner as the method of measuring a dry shrinkage rate described above.

### Shrinkage rate in electrolyte (units:%)

Shrinkage rates in an electrolyte were measured in the same manner as described in the method of measuring a shrinkage rate in an electrolyte above.

### Cell characteristics

Cell characteristics were measured in the same manner as the cell characteristic measurement described above.

### High-temperature lifespan

A positive electrode slurry was prepared by adding lithium-cobalt oxide (LiCoO₂), polyvinylidene fluoride (PVdF), and carbon black in a weight ratio of 96:2:2 to N-methyl-2-pyrrolidone. A positive electrode was prepared by coating an aluminum foil with the slurry, and drying and rolling the resulting aluminum foil.

A negative electrode slurry was prepared by adding graphite, styrene butadiene rubber, and carboxymethyl cellulose in a weight ratio of 98:1:1 to distilled water. A negative electrode was prepared by coating a copper foil with the slurry, and drying and rolling the resulting copper foil.

Between the prepared positive and negative electrodes, the separators of the examples and comparative examples were each interposed to prepare jelly-roll electrode assemblies in a winding configuration. An electrode, prepared by adding 1.15M LiPF₆ to a solvent mixed with ethylene carbonate, ethylmethyl carbonate, and diethyl carbonate at a volume ratio of 3:5:2, was injected into each of the prepared electrode assemblies, and the electrode assemblies were sealed to manufacture the respective rechargeable lithium batteries.

Initial charging and discharging were performed on the respective rechargeable lithium batteries by charging at 55 °C with a constant current of 0.1 C up to the uppermost voltage of 4.25 V, and discharging with a constant current of 0.1 C to a discharge cut-off voltage of 3.5 V. Afterward, charging and discharging were repeated for 10 cycles at 0.5 C in the voltage range of 3.5 V to 4.25 V.

After 10 cycles, the temperature of the rechargeable lithium battery was measured, and the degree of increase relative to the initial temperature was designated as ΔT. In addition, the efficiency was calculated according to Mathematical Formula 2 below. ΔT is preferably 5 °C or less, and the efficiency is preferably 97.5% or more. 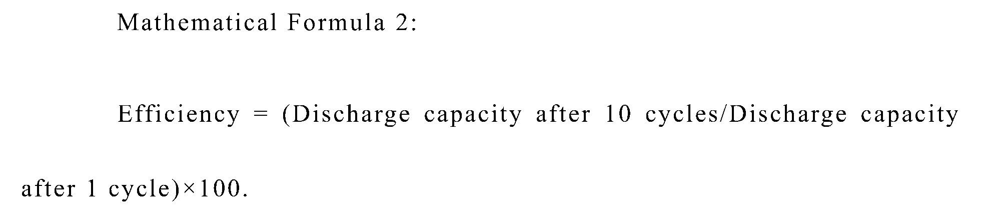 Efficiency = (Discharge capacity after 10 cycles/Discharge capacity after 1 cycle)×100.

**Table 3:**

| | First binde r | Se co nd bin der | We igh t rat io 1 | Cross linkin g agent, conte nt | We igh t rat io 2 | We igh t rat io 3 | Dry shrin kage rate | | Shrin kage rate in electr olyte | | Cell charac teristi cs | Surf ace roug hnes s | High-temperat ure lifespan | |
|---|---|---|---|---|---|---|---|---|---|---|---|---|---|---|
| | | | | | | | M D | T D | M D | T D | | | Δ T | Effi cien cy |
| Exam ple 18 | Prep arati on Exam ple 1 | C M C-Na | 50: 50 | Citric acid, 10 | 1:1 | 1:2 0 | 5 . 0 | 3 2 | 4. 5 | 3. 3 | OK | 0.52 | 4 | 97.5 |
| Exam ple 19 | Prep arati on Exam ple 1 | C M C-Na | 50: 50 | Citric acid, 10 | 1:4 | 1:2 0 | 2 . 1 | 2 2 | 2. 5 | 3. 1 | OK | 0.35 | 2. 0 | 99 |
| Exam ple 20 | Prep arati on Exam ple 1 | C M C-Na | 50: 50 | Citric acid, 10 | 1:9 | 1:2 0 | 2 9 | 2 . 5 | 3. 1 | 3. 2 | OK | 0.29 | 2. 5 | 98.7 |
| Exam ple 21 | Prep arati on Exam ple 1 | C M C-Na | 50: 50 | Citric acid, 2 | 1:4 | 1:2 0 | 4 . 5 | 4 | 4. 5 | 5 | OK | 0.35 | 3. 2 | 98 |
| Exam ple 22 | Prep arati on Exam ple 1 | C M C-Na | 50: 50 | Citric acid, 5 | 1:4 | 1:2 0 | 4 | 4 . 3 | 4 | 4. 5 | OK | 0.35 | 3. 0 | 98.2 |
| Exam ple 23 | Prep arati on Exam ple 1 | C M C-Na | 50: 50 | Citric acid, 20 | 1:4 | 1:2 0 | 2 . 7 | 1 2 | 3. 5 | 3. 0 | OK | 0.35 | 2. 2 | 98.9 |
| Exam ple 24 | Prep arati on Exam ple 1 | C M C-Na | 70: 30 | Citric acid, 10 | 1:4 | 1:2 0 | 2 . 8 | 2 4 | 3. 0 | 3. 2 | OK | 0.35 | 2. 3 | 98.7 |
| Exam ple 25 | Prep arati on Exam ple 1 | C M C-Na | 40: 60 | Citric acid, 10 | 1:4 | 1:2 0 | 3 . 0 | 2 7 | 3. 3 | 3. 5 | OK | 0.35 | 2. 4 | 98.5 |
| Exam ple 26 | Prep arati on Exam ple 1 | C M C-Na | 20: 80 | Citric acid, 10 | 1:1 0 | 1:2 0 | 3 . 5 | 3 3 | 3. 7 | 3. 5 | OK | 0.28 | 2. 8 | 98.3 |
| Exam ple 27 | Prep arati on Exam ple 2 | C M C-Na | 50: 50 | Citric acid, 10 | 1:1 | 1:2 0 | 4 . 5 | 4 2 | 4. 8 | 4. 4 | OK | 0.5 | 3. 5 | 97.9 |
| Comp arativ e Exam ple 13 | Prep arati on Exam ple 1 | - | 10 0:0 | Citric acid, 10 | 1:4 | 1:2 0 | 2 0 | 2 4 | 3 0 | 3 6 | NG | 0.35 | 8. 6 | 94 |
| Comp arativ e Exam ple 14 | - | C M C- Na | 0:1 00 | Citric acid, 10 | 1:4 | 1:2 0 | 4 5 | 4 3 | 5 5 | 6 2 | NG | 0.35 | 1 0. 1 | 91 |
| Comp arativ e Exam ple 15 | Prep arati on Exam ple 1 | C M C-Na | 50: 50 | - | 1:4 | 1:2 0 | 3 5 | 3 7 | 4 4 | 4 3 | NG | 0.35 | 9. 5 | 92 |

| | | | | | | | | | | | | | | |
|---|---|---|---|---|---|---|---|---|---|---|---|---|---|---|
| *In Table 3, weight ratio 1: the weight ratio of the first binder to the second binder; weight ratio 2: the weight ratio of the second filler (needle-shaped): the first filler (cubic); weight ratio 3: the weight ratio of the mixture of the first binder and the second binder to the mixture of the first filler and the second filler. | | | | | | | | | | | | | | |

As shown in Table 3 above, since the separators of the examples can inhibit battery ignition and explosion due to external impact, battery reliability and stability can increase. In addition, as the separators of the examples provide a low shrinkage rate, battery safety can increase. In addition, the separators of the examples can improve the high-temperature lifespan of the battery, thereby increasing the lifespan and reliability of the battery.

However, as shown in Table 3 above, the separators of the comparative examples showed poor effects compared to those of the examples.

### Example 28

A dispersion was prepared by mixing the acrylic binder prepared in Preparation Example 1 (10 wt% in distilled water) and boehmite (particle size (D100): 500 nm, particle size (D50): 200 nm, plane-shaped) as a filler, adding water as a solvent, milling the resulting mixture using a bead mill at 25 °C for 30 minutes, and then dispersing the milled result.

A composition for a first coating layer was prepared by adding CMC-Na (weight average molecular weight: 200,000 g/mol) and citric acid to the dispersion, and adding water to have a total solid content of 20 wt%.

The composition for a first coating layer includes 50 parts by weight of an acrylic binder; 50 parts by weight of CMC-Na; and 10 parts by weight of citric acid with respect to 100 parts by weight of the total of the acrylic binder and the CMC-Na. In the composition for a first coating layer, the weight ratio of a total of the acrylic binder and the CMC-Na to the filler is 1:20.

A first coating layer (thickness: 2 µm) was prepared by coating both surfaces of a polyethylene-based film (thickness: 10 µm (SK), air permeability: 120 sec/100 cc, and puncture strength: 600 kgf) with the composition for a first coating layer to a thickness of 2 µm through a die coating method, and drying and aging the resulting film in an oven at 85 °C for 16 hours.

A separator was prepared by forming a second coating layer (thickness: 2.0 µm) by dissolving polyethylene wax (average particle size (D50): 0.5 µm, melting point: 110 °C) in an aqueous solvent, applying it on the first coating layer to a predetermined thickness, and drying and aging the resulting layer in an oven at 85 °C for 16 hours.

### Examples 29 and 30

Separators, in which a first coating layer and a second coating layer were sequentially formed, on both surfaces of a porous substrate, were prepared in the same manner as in Example 28, except that the weight ratio of an acrylic binder and CMC-Na, and/or the content of the citric acid used in Example 29 were changed.

### Example 31

A dispersion was prepared by mixing the acrylic binder prepared in Preparation Example 1 (10 wt% in distilled water) and boehmite (particle size (D100): 500 nm, particle size (D50): 200 nm, plane-shaped) as a filler, adding water as a solvent, milling the resulting mixture using a bead mill at 25 °C for 30 minutes, and then dispersing the milled result.

A composition for a first coating layer was prepared by adding CMC-Na (weight average molecular weight: 200,000 g/mol) and citric acid to the dispersion, and adding water to have a total solid content of 20 wt%.

The composition for a first coating layer includes 50 parts by weight of an acrylic binder; 50 parts by weight of CMC-Na; and 10 parts by weight of citric acid with respect to 100 parts by weight of the total of the acrylic binder and the CMC-Na. In the composition for a first coating layer, the weight ratio of a total of the acrylic binder and the CMC-Na to the filler is 1:20.

A first coating layer (thickness: 2 µm) was prepared by coating both surfaces of a polyethylene-based film (thickness: 10 µm (SK), air permeability: 120 sec/100 cc, and puncture strength: 600 kgf) with the composition for a first coating layer to a thickness of 2 µm through a die coating method, and drying and aging the resulting film in an oven at 85 °C for 16 hours.

An adhesive layer (thickness: 1 µm) was formed on the first coating layer by coating the first coating layer with polymethylmethacrylate (PMMA) as an adhesive binder, and drying and aging the resulting layer in an oven at 85 °C for 16 hours.

A separator was prepared by forming a second coating layer (thickness: 2 µm) by dissolving polyethylene wax (average particle size (D50): 0.5 µm, melting point: 110 °C) in an aqueous solvent, applying it on the first coating layer to a predetermined thickness, and drying and aging the resulting layer in an oven at 85 °C for 16 hours.

### Example 32

A dispersion was prepared by mixing the acrylic binder prepared in Preparation Example 1 (10 wt% in distilled water) and boehmite (particle size (D100): 500 nm, particle size (D50): 200 nm, plane-shaped) as a filler, adding water as a solvent, milling the resulting mixture using a bead mill at 25 °C for 30 minutes, and then dispersing the milled result.

A composition for a third coating layer was prepared by adding CMC-Na (weight average molecular weight: 200,000 g/mol) and citric acid to the dispersion, adding water to have a total solid content of 20 wt%, and including PMMA as an adhesive binder.

The composition for a third coating layer includes 50 parts by weight of the acrylic binder; 50 parts by weight of the CMC-Na; and 10 parts by weight of the citric acid with respect to 100 parts by weight of the total of the acrylic binder and the CMC-Na. In the composition for a third coating layer, the weight ratio of a total of the acrylic binder and the CMC-Na to the filler is 1:20. The adhesive binder is included at 25 parts by weight with respect to 100 parts by weight of a total of the acrylic binder and the CMC-Na.

A third coating layer (thickness: 2 µm) was prepared by coating both surfaces of a polyethylene-based film (thickness: 10 µm (SK), air permeability: 120 sec/100 cc, and puncture strength: 600 kgf) with the composition for a third coating layer to a thickness of 2 µm through a die coating method, and drying and aging the resulting film in an oven at 85 °C for 16 hours.

A separator was prepared by forming a second coating layer (thickness: 2 µm) by dissolving polyethylene wax (average particle size (D50): 0.5 µm, melting point: 110 °C) in an aqueous solvent, applying it on the third coating layer to a predetermined thickness, and drying and aging the resulting layer in an oven at 85 °C for 16 hours.

### Comparative Example 16

A separator was prepared in the same manner as in Example 28, except that an aziridine crosslinking agent (trimethylolpropane tris(2-methyl-1-aziridinepropionate) was used instead of citric acid used in Example 28, and the aziridine-based crosslinking agent was added at 10 parts by weight with respect to 100 parts by weight of a total of the acrylic acid and the CMC-Na.

### Comparative Example 17

A separator was prepared in the same manner as in Example 28, except that a carbodiimide-based crosslinking agent (polycarbodiimide-based compound, CARBODILITE V-50 (Nisshinbo Chemical)) was used instead of citric acid used in Example 28, and the carbodiimide - based crosslinking agent was included at 10 parts by weight with respect to 100 parts by weight of a total of the acrylic binder and the CMC-Na.

### Comparative Example 18

A separator was prepared in the same manner as in Example 28, except that an epoxy-based crosslinking agent (diethyleneglycol diglycidylether) was used instead of citric acid used in Example 28, and the epoxy-based crosslinking agent was included at 10 parts by weight with respect to 100 parts by weight of a total of the acrylic binder and the CMC-Na.

### Comparative Example 19

A separator was prepared in the same manner as in Example 28, except that citric acid was not included in Example 28.

### Comparative Example 20

A separator was prepared in the same manner as in Example 28, except that adipic acid was included at 10 parts by weight with respect to 100 parts by weight of a total of the acrylic binder and the sodium carboxymethyl cellulose.

### Breakdown voltage (units: V)

The insulating property (breakdown voltage, BDV) of the separator was measured on each of the separators prepared in the examples and comparative examples. BDV was measured using KIKISUI TOS5301 while placing the separator between stainless steel (SUS) plates. The BDV value was defined as the voltage at the point where a current value of 3 mA or more was confirmed by elevating the voltage, that is, the point where the voltage increase stops (i.e., breakdown or short).

### Shutdown temperature (units: °C)

The change in resistance according to temperature was evaluated when using each of the batteries manufactured in the examples and comparative examples. When resistance was measured with respect to temperature, the temperature at which the resistance first increased as the initial temperature increased was defined as the shutdown temperature.

### Shrinkage rate in electrolyte (units: %)

Shrinkage rates in an electrolyte were measured in the same manner as the method of measuring a shrinkage rate in an electrolyte described above.

**Table 4:**

| | Weigh t ratio | Crosslinking agent | | PE conten t (wt%) | BD V | Shutdown temperatur e | Shrinkage rate in electrolyt e | |
|---|---|---|---|---|---|---|---|---|
| | | Type | Conten t | | | | MD | TD |
| Example 28 | 50:50 | Citric acid | 10 | 20 | 2.5 | 126 | 3.5 | 3.0 |
| Example 29 | 50:50 | Citric acid | 20 | 20 | 2.6 | 126 | 3.0 | 2.5 |
| Example 30 | 60:40 | Citric acid | 10 | 20 | 2.5 | 126 | 3.0 | 2.8 |
| Example 31 | 50:50 | Citric acid | 10 | 17 | 2.5 | 128 | 3.0 | 2.5 |
| Example 32 | 50:50 | Citric acid | 10 | 25 | 2.6 | 124 | 3.0 | 3.0 |
| Comparativ e Example 16 | 50:50 | Aziridine | 10 | 20 | 2.3 | 130 | 25 | 29 |
| Comparativ e Example 17 | 50:50 | Carbodiimid e | 10 | 20 | 2.2 | 130 | 30 | 29 |
| Comparativ e Example 18 | 50:50 | Epoxy | 10 | 20 | 2.2 | 130 | 30 | 32 |
| Comparativ e Example 19 | 50:50 | - | - | 20 | 2.0 | 130 | 29 | 36 |
| Comparativ e Example 20 | 50:50 | Adipic acid | 10 | 20 | 2.1 | 130 | 24 | 33 |

| | | | | | | | | |
|---|---|---|---|---|---|---|---|---|
| *In Table 4, Weight ratio: the weight ratio of the first binder (acrylic binder) to the second binder (CMC-Na); Content: the content of the crosslinking agent (units: parts by weight) with respect to 100 parts by weight of a total of the first binder and the second binder; PE content: the proportion of the coating layer containing PE (second coating layer) of the total coating layer stacked on the porous substrate of the separator. | | | | | | | | |

As shown in Table 4 above, the separators of the examples can improve the shutdown temperature and the breakdown voltage, thereby providing batteries with enhanced safety. Since the separators of the examples have a low heat shrinkage rate, they can provide batteries with desired or improved reliability and lifespan.

However, as shown in Table 4 above, the separators of the comparative examples had significantly lower breakdown voltage, shutdown temperature, and heat shrinkage rate than the examples.

### Example 33

### Preparation of first binder

In a 10 L four-neck flask equipped with a stirrer, a thermometer, and a condenser, after adding distilled water (6361 g), acrylamide (9.5 mol), potassium persulfate (0.01 mmol), 2-acrylamido-2-methylpropanesulfonic acid (0.5 mol), and a 5N sodium hydroxide aqueous solution (1.05 equiv. with respect to the total amount of the 2-acrylamido-2-methylpropanesulfonic acid), the operation of reducing the inner pressure to 10 mmHg using a diaphragm pump and returning the pressure to normal pressure with nitrogen was repeated three times.

The reaction was performed for 12 hours while controlling the temperature of the reaction solution to be stabilized between 65 to 70 °C. After cooling to room temperature, the pH of the reaction solution was adjusted to 7 to 8 using a 25% aqueous ammonia solution.

By the above-described method, poly(acrylamide-co-2-acrylamido-2-methylpropanesulfonic acid sodium salt) was prepared. The molar ratio of acrylamide and 2-acrylamido-2-methylpropanesulfonic acid sodium salt is 95:5. About 10 mL of the reaction solution (reaction product) was taken and the content of a non-volatile component was measured, which was 9.5wt% (theoretical value: 10wt%).

A first binder was prepared by dissolving the prepared poly(acrylamide-co-2-acrylamido-2-methylpropanesulfonic acid sodium salt) in an acidic solution, and adding a predetermined amount of a lithium source, LiOH, such that, among the number of moles of the total sodium cations of the prepared poly(acrylamide-co-2-acrylamido-2-methylpropanesulfonic acid sodium salt), 25.9% (lithiation ratio 1) were substituted with lithium cations.

### Preparation of second binder

A second binder was prepared by dissolving the CMC-Na (weight average molecular weight: 200,000 g/mol) in an acidic solution and adding a predetermined amount of LiOH such that, among the number of moles of the total sodium cations of the CMC-Na, 3.77% (lithiation ratio 2) were substituted with lithium cations.

### Preparation of separator

A dispersion was prepared by mixing the prepared first binder solution (10 wt% in distilled water) and boehmite (particle size (D100): 500 nm, particle size (D50): 200 nm, plane-shaped) as a filler, adding water as a solvent, milling the resulting mixture using a bead mill at 25 °C for 30 minutes, and then dispersing the milled result.

A composition for a coating layer was prepared by adding the prepared second binder and citric acid to the dispersion and adding water to have a total solid content of 20 wt%.

The composition for a coating layer includes 50 parts by weight of the first binder; 50 parts by weight of the second binder; and 10 parts by weight of citric acid with respect to 100 parts by weight of the total of the first binder and the second binder. The weight ratio of the total of the first binder and the second binder to the filler is 1:20.

A separator was prepared by coating both surfaces of a polyethylene-based film (thickness: 8 µm (SK), air permeability: 120 sec/100 cc, and puncture strength: 480 kgf) with the composition for a coating layer to a thickness of 1.5 µm through a die coating method, and drying and aging the resulting film in an oven at 100 °C for 16 hours.

### Examples 34 to 39

Separators were prepared in the same manner as in Example 33, except that the lithiation ratio 1, the lithiation ratio 2, the weight ratio between the first binder and the second binder, and/or the content of the crosslinking agent used in Example 33 were changed as shown in Table 5 below.

### Comparative Examples 21 to 25

Separators were prepared in the same manner as in Example 33, except that the lithiation ratio 1, the lithiation ratio 2, the weight ratio between the first binder and the second binder, and/or the content of the crosslinking agent used in Example 33 were changed as shown in Table 5 below.

### Comparative Example 26

A separator was prepared in the same manner as in Example 34, except that an aziridine-based crosslinking agent, trimethylolpropane tris(2-methyl-1-aziridinepropionate), was used instead of citric acid as a crosslinking agent used in Example 34.

### Content of lithium cations in separator coating layer (units: ppm)

Coating layers were prepared with reference to the examples and comparative examples. Contents of lithium cations were measured by the following method for each of the prepared coating layers. The contents of the lithium cations were measured by the ICP-OES method. A sample solution was prepared by melting each of the coating layers. A set of calibration solutions is prepared, where solutions with accurately known concentrations of lithium cations are prepared. The calibration solution set was injected into the ICP-OES instrument, a plasma was introduced, and the emission intensity of light was measured according to the concentration of lithium cations to obtain a calibration graph. Subsequently, the sample solution was introduced into the ICP-OES instrument, plasma was applied, and the emission intensity of light was measured to obtain the concentration of lithium cations via the calibration graph.

### 300-cycle capacity retention (units: %)

Batteries were manufactured using the respective separators prepared in the examples and comparative examples.

A positive electrode slurry was prepared by mixing 97 wt% of a lithium-cobalt-nickel-aluminum oxide as a positive electrode active material, 1.5 wt% of carbon nanotubes as a conductive material, and 1.5 wt% of polyvinylidene fluoride, and adding N-methyl-2-pyrrolidone. A positive electrode was prepared by coating an aluminum foil with the prepared positive electrode slurry, and then drying and rolling the resulting aluminum foil. A negative electrode slurry was prepared by mixing 97.4 wt% of graphite as a negative electrode active material, 1.0 wt% of carboxymethyl cellulose, 1.5 wt% of styrene-butadiene rubber, and 0.1 wt% of carbon nanotubes as a conductive material, and adding distilled water. A negative electrode was prepared by coating a copper foil with the prepared negative electrode slurry and drying and rolling the resulting copper foil.

One sheet of the separator was placed between the positive electrode and the negative electrode to form three sets of stacked structures (the positive electrode-the separator-the negative electrode), and then the stacked structures were put into a pouch. 2.5 g of an electrolyte (1.5 M LiPF₆-dissolved ethylene carbonate, ethylmethyl carbonate, and dimethyl carbonate (volume ratio of 30:50:20)) was injected, left at 25 °C for 12 hours, and then left in an oven at 150 °C for 1 hour, thereby manufacturing a battery.

Initial charging and discharging were performed on the respective rechargeable lithium batteries by charging at 55 °C with a constant current of 0.5 C to the uppermost voltage of 4.35 V, and discharging with a constant current of 2 C to a discharge cut-off voltage of 2.5 V. Afterward, charging and discharging were repeated for 300 cycles at 0.5 C in the voltage range of 2.5 V to 4.25 V. Capacity retention was the percentage of the ratio of the discharge capacity after 300 cycles to the discharge capacity at the first cycle.

**Table 5:**

| | Binder | | Binder weight ratio | Crosslinking agent | | Lithium cation content | 300-cycle capacity retention |
|---|---|---|---|---|---|---|---|
| | Lithiation ratio 1 | Lithiation ratio 2 | | Type | Content | | |
| Example 33 | 25.9% | 3.77% | 50:50 | Citric acid | 10 | 50 | 94 |
| Example 34 | 38.9% | 5.65% | 50:50 | Citric acid | 10 | 75 | 95 |
| Example 35 | 51.9% | 7.54% | 50:50 | Citric acid | 10 | 100 | 95 |
| Example 36 | 36.9% | 5.35% | 50:50 | Citric acid | 5 | 75 | 93 |
| Example 37 | 43.8% | 6.36% | 50:50 | Citric acid | 20 | 75 | 92 |
| Example 38 | 38.9% | 5.65% | 70:30 | Citric acid | 10 | 75 | 93 |
| Example 39 | 38.9% | 5.65% | 40:60 | Citric acid | 10 | 75 | 93 |
| Comparative Example 21 | 38.9% | - | 100:0 | Citric acid | 10 | 75 | 75 |
| Comparative Example 22 | - | 5.65% | 0:100 | Citric acid | 10 | 75 | 75 |
| Comparative Example 23 | 35.0% | 5.09% | 50:50 | - | - | 75 | 65 |
| Comparative Example 24 | 35.4% | 5.14% | 50:50 | Citric acid | 1 | 75 | 69 |
| Comparative Example 25 | 58.4% | 8.46% | 50:50 | Citric acid | 60 | 75 | 83 |
| Comparative Example 26 | 38.9% | 5.65% | 50:50 | Aziridine | 10 | 75 | 86 |

| | | | | | | | |
|---|---|---|---|---|---|---|---|
| *In Table 5, weight ratio 1: the weight ratio of the first binder to the second binder; weight ratio 2: the weight ratio of the total of the first binder and the second binder to the filler. | | | | | | | |

As shown in Table 5 above, the separators of the examples can significantly improve the battery lifespan at high temperatures. However, as shown in Table 5 above, the separators of the comparative examples did not have high life retention rates at high temperatures as compared to the separators of the examples.

Although the example embodiments of the present disclosure have been described above, the present disclosure is not limited thereto, and it is possible to implement various modifications within the scope of the claims, the detailed description of the present disclosure, and the accompanying drawings. These modifications also fall within the scope of the present disclosure.

## Claims

1. A separator for a rechargeable battery, the separator comprising:
a porous substrate (1), and a coating layer (2) located on at least one surface of the porous substrate (1),
wherein the coating layer (2) comprises a crosslinked product (4) of a mixture including a first binder and a second binder, and a crosslinking agent; and a filler (3),
the first binder is an aqueous binder, the second binder is a carboxyalkyl cellulose-based compound or a salt thereof,
the crosslinking agent comprises citric acid, and
the citric acid is included in a range of ≥ 5 parts by weight to ≤ 50 parts by weight with respect to 100 parts by weight of the total of the first and second binders.

2. The separator of claim 1, wherein the coating layer (2) comprises a composition comprising the first binder, the second binder, the crosslinking agent, and the filler (3).

3. The separator of claim 1 or 2, wherein the second binder comprises carboxymethyl cellulose or an alkali metal salt thereof.

4. The separator according to any one of claims 1 to 3, wherein the carboxyalkyl cellulose-based compound or a salt thereof has a weight average molecular weight in a range of ≥ 100,000 g/mol to ≤ 600,000 g/mol.

5. The separator according to any one of claims 1 to 4, wherein the first binder and the second binder are included in a weight ratio in a range of about 80:20 to about 20:80 with respect to 100 parts by weight of the total of the first binder and the second binder.

6. The separator according to any one of claims 1 to 5, wherein the citric acid is included in a range of ≥ 5 parts by weight to ≤ 200 parts by weight with respect to 100 parts by weight of the first binder, and is included in a range of ≥ 5 parts by weight to ≤ 200 parts by weight with respect to 100 parts by weight of the second binder.

7. The separator according to any one of claims 1 to 6, wherein the filler (3) has a particle size (D100) of about 0.7 µm or less.

8. The separator according to any one of claims 1 to 7, wherein the filler (3) comprises boehmite and is plate-shaped.

9. The separator according to any one of claims 1 to 8, wherein the first binder comprises a (meth)acrylic binder including the crosslinking unit with citric acid, which includes one or more of a unit derived from (meth)acrylic acid or a salt thereof, a unit derived from (meth)acrylamide, a unit derived from hydroxyalkyl (meth)acrylate, a unit derived from (meth)acrylonitrile, a unit derived from (meth)acrylamido-2-methylpropane sulfonic acid or a salt thereof, and a unit derived from ethylene imine.

10. The separator of claim 9, wherein the crosslinking unit with citric acid is included in a range of ≥ 10 mol% to ≤ 100 mol% of the (meth)acrylic binder.

11. The separator according to any one of claims 1 to 10, wherein the (meth)acrylic binder comprises a structural unit containing a sulfonate group.

12. The separator of claim 11, wherein the (meth)acrylic binder further comprises one or more of a structural unit derived from (meth)acrylate or (meth)acrylic acid, a structural unit containing a cyano group, and a structural unit derived from (meth)acryl amide.

13. The separator according to any one of claims 1 to 12, wherein the citric acid is included at about 95 wt% or more in the crosslinking agent.

14. The separator according to any one of claims 1 to 13, wherein the mass ratio of the mixture of the first binder and the second binder to the filler (3) ranges from about 1:10 to about 1:50.

15. The separator according to any one of claims 1 to 14, wherein the composition for a coating layer (2) further comprises an alcohol.

16. The separator of claim 15, wherein the alcohol has a boiling point of about 60 °C or more.

17. The separator of claim 15 or 16, wherein the alcohol comprises a monohydric alcohol having a main chain carbon number in a range of 1 to 4.

18. The separator according to any one of claims 15 to 17, wherein the alcohol is included in a range of ≥ 5 parts by weight to ≤ 50 parts by weight with respect to 100 parts by weight of the second binder.

19. The separator according to any one of claims 1 to 18, wherein the filler (3) comprises a mixture of a first filler and a second filler, and wherein the first filler and the second filler have different aspect ratios from each other.

20. The separator of claim 19, wherein the second filler comprises a needle-shaped filler, and the first filler comprises a cubic filler.

21. The separator of claim 19 or 20, wherein the second filler (3) comprises boehmite, and the first filler comprises boehmite.

22. The separator according to any one of claims 1 to 21, wherein the coating layer (2) further comprises polymer particles with a melting point in a range of ≥ 80 °C to ≤ 135 °C.

23. The separator of claim 22, wherein the polymer particles with the melting point in a range of ≥ 80 °C to ≤ 135 °C are included in a range of ≥ 5 wt% to ≤ 30 wt% in the coating layer (2).

24. The separator of claim 22 or 23, wherein the polymer particles with the melting point in a range of ≥ 80 °C to ≤ 135 °C comprise one or more of a polyolefin, a polyolefin derivative, and polyolefin wax.

25. The separator according to any one of claims 22 to 24, wherein the polymer particles have an average particle size (D50) in a range of ≥ 0.1 µm to ≤ 2 µm.

26. The separator according to any one of claims 22 to 25, wherein the coating layer (2) is a stacked structure of a first coating layer (2) and a second coating layer (2),
wherein the first coating layer (2) comprises the filler (3) and the crosslinked product (4), and
the second coating layer (2) comprises the polymer particles with the melting point in a range of ≥ 80°C to ≤ 135 °C.

27. The separator according to any one of claims 22 to 26, wherein the coating layer (2) comprises a stacked structure of a first coating layer (2), an adhesive layer, and a second coating layer (2),
wherein the first coating layer (2) comprises the filler (3) and the crosslinked product (4),
the adhesive layer comprises an adhesive binder, and
the second coating layer (2) comprises the polymer particles with the melting point in a range of ≥ 80 °C to ≤ 135 °C.

28. The separator according to any one of claim 22 to 27, wherein the coating layer (2) comprises a third coating layer (2) and a second coating layer (2), in which the third coating layer (2) comprises a filler (3), the crosslinked product (4), and an adhesive binder, and
the second coating layer (2) comprises the polymer particles with the melting point in a range of ≥ 80 °C to ≤ 135 °C.

29. The separator according to any one of claims 1 to 28, wherein the coating layer (2) comprises lithium cations, and has a content of the lithium cations in a range of ≥ 50 ppm to ≤ 200 ppm.

30. The separator according to any one of claims 1 to 29, wherein the first binder comprises a structural unit containing a lithium salt of sulfonic acid.

31. The separator of claim 30, wherein the structural unit containing a lithium salt of sulfonic acid is represented by Chemical Formula 9: 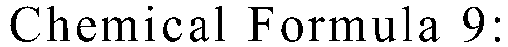 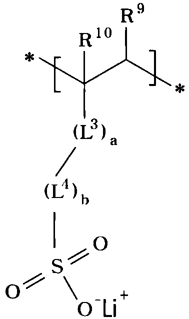 wherein:
R⁹ and R¹⁰ each independently comprises hydrogen or a C1 to C3 alkyl group,
L³ comprises -C(=O)-, -C(=O)O-, -OC(=O)-, -O-, or -C(=O)NH-,
L⁴ comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, and
a and b are each independently an integer in a range from 0 to 2.

32. The separator according to any one of claims 1 to 31, wherein the alkali metal salt of the carboxyalkyl cellulose-based compound comprises a lithium salt of carboxymethyl cellulose of Chemical Formula 10: 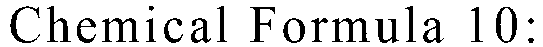 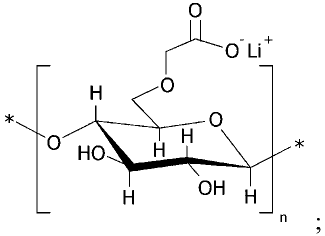 wherein n is a number of moles of a repeating unit.

33. The separator according to any one of claims 1 to 32, wherein the alkali metal salt of the carboxyalkyl cellulose-based compound further comprises an alkali metal salt of carboxymethyl cellulose of Chemical Formula 11: 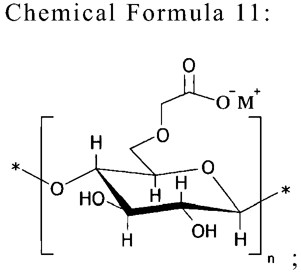 wherein M comprises sodium, potassium, rubidium, or cesium, and n is a number of moles of a repeating unit.

34. A rechargeable battery, comprising:
a positive electrode;
a negative electrode; and
the separator for a rechargeable battery of claim 1, located between the positive electrode and the negative electrode.
